(19) Europäisches Patentamt
European Patent Office
Office européen des brevets

(11) EP 4 671 287 A1

(12) **EUROPEAN PATENT APPLICATION**
published in accordance with Art. 153(4) EPC

(43) Date of publication:
**31.12.2025 Bulletin 2026/01**

(21) Application number: **24764139.2**

(22) Date of filing: **22.02.2024**

(51) International Patent Classification (IPC):
***C08F 20/00*** *(2006.01)* ***C08F 2/50*** *(2006.01)*
***B01J 35/39*** *(2024.01)* ***B01J 31/02*** *(2006.01)*

(52) Cooperative Patent Classification (CPC):
**B01J 31/02; B01J 35/00; B01J 35/39; C08F 2/50; C08F 20/00**

(86) International application number:
**PCT/KR2024/002353**

(87) International publication number:
**WO 2024/181739 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.02.2023 KR 20230026669**

(71) Applicant: **Seoul National University R&DB Foundation**
**Seoul 08826 (KR)**

(72) Inventors:
- **KWON, Min Sang**
  **Seongnam-si Gyeonggi-do 13581 (KR)**
- **KWON, Yonghwan**
  **Seoul 08730 (KR)**
- **LEE, Seokju**
  **Seoul 08785 (KR)**

(74) Representative: **AWA Sweden AB**
**Matrosgatan 1**
**Box 5117**
**200 71 Malmö (SE)**

(54) **PHOTOCATALYST COMPOSITION, PHOTOCURABLE COMPOSITION COMPRISING SAME AND METHOD FOR PREPARING PHOTOCURED RESIN BY USING SAME**

(57) The present disclosure relates to a photocatalyst composition, a photopolymerizable composition comprising the same, and a method for preparing a photocured resin using the same. The photocatalyst composition of the present disclosure comprises a photocatalyst having thermally activated delayed fluorescence (TADF) property and an ionic co-initiator, and by the combined use and optimization of these components, a photoinitiating system with excellent radical generation efficiency can be formed even with a small amount of photocatalyst. Accordingly, when a monomer is polymerized using the photocatalyst composition of the present disclosure, it is possible to prepare a photocured resin with an excellent polymerization rate. Moreover, since the amount of photocatalyst used is extremely small, deep curing is also achievable. In addition, because the present disclosure initiates the polymerization reaction using visible light, curing is possible even in matrices that are impermeable to UV light, and it is also possible to prepare a resin that exhibits high transparency despite visible light absorption.

【FIG. 1】

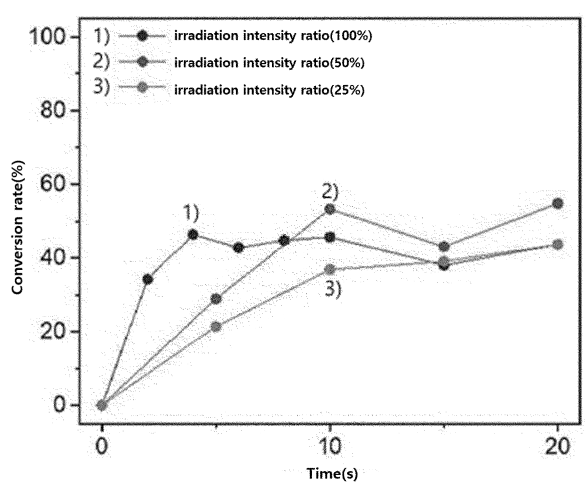


EP 4 671 287 A1

## Description

[Technical Field]

The present disclosure relates to a photocatalyst composition, a photocurable composition comprising the same, and a method for preparing a photocured resin using the same, and more particularly, to a photocatalyst composition having excellent radical generation efficiency through the combined use of a photocatalyst and an ionic co-initiator, a photocurable composition comprising the same, and a method for preparing a photocured resin having an excellent polymerization rate using the same.

[Background Art]

The photocured resin refers to a resin formed by polymerization of a monomer by light, and the photocuring method, compared to conventional thermal curing methods, not only enables easy spatial and temporal control, but also can be applied to substrates that are susceptible to thermal effects, and is advantageous in terms of energy efficiency and environmental friendliness. In particular, in the production of acrylic resins, when a thermal curing method is used, post-treatment of residual heat in subsequent processes is essential, and thus the photocuring method is receiving attention as a means of solving such process inefficiency problems.
A representative example of such a photocuring method is the use of radiation irradiation such as ultraviolet rays. A typical photocurable composition generally comprises a polymerization initiator, commonly referred to as a photoinitiator, which decomposes upon light absorption and generates free radicals or cations. For example, Korean Patent Publication No. 10-2010-0072003 discloses a photocurable resin composition that can be cured by ultraviolet light, the composition comprising an acrylate compound and a photopolymerization initiator.
However, conventional photoinitiators are single-use substances and cannot be reused multiple times, and thus a relatively high content of the photoinitiator must be included to ensure sufficient physical properties and viscosity of the resin, which is a disadvantage. In addition, in the case of curing by ultraviolet light, there is a limitation in that curing is not possible within materials that are impermeable to ultraviolet light, typically matrices of polyimide.
As a technique for solving the problems associated with ultraviolet curing, Korean Patent No. 10-2019660 and the like disclose photocurable resin compositions that can be cured with visible light using initiators having enhanced sensitivity to visible light. However, even when the light sensitivity of the initiator is increased, there remains a limitation in that a small amount of initiator still does not achieve a sufficient polymerization rate. Furthermore, substances that absorb visible light generally have low transparency, posing a problem in that their use in optical applications is limited.
Accordingly, there is a need to develop a photocurable resin that contains a very small amount of a component for photo-initiation, while still allowing efficient polymerization under visible light and exhibiting excellent transparency, so as to be applicable without limitation to optical applications.

[Disclosure]

[Technical Problem]

An object of the present disclosure is to provide a photocatalyst composition capable of forming a photoinitiating system having excellent radical generation efficiency.
Another object of the present disclosure is to provide a photocurable composition comprising the photocatalyst composition and a monomer, wherein the composition exhibits an excellent polymerization rate of the monomer.
Still another object of the present disclosure is to provide a method for preparing a photocured resin having an excellent polymerization rate using the photocatalyst composition and a monomer.

[Technical Solution]

In order to achieve the above objects, the present disclosure provides a photocatalyst composition comprising a photocatalyst having thermally activated delayed fluorescence (TADF) property; and an ionic co-initiator.
In the present disclosure, the photocatalyst may be one that absorbs light in a wavelength range of 400 to 600 nm.
In the present disclosure, the photocatalyst may be a cyanoarene-based compound.
In the present disclosure, the photocatalyst may be represented by the following Chemical Formula 1:

[Chemical Formula 1]

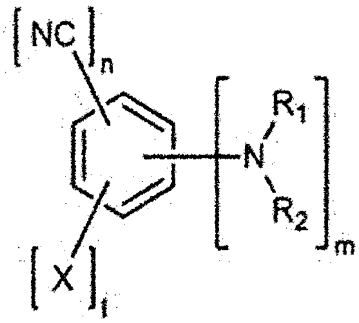

wherein, in Chemical Formula 1,

$R_1$ and $R_2$ are each independently hydrogen, deuterium, a halogen atom, a nitro group ($-NO_2$), a cyano group (-CN), -COOR (where R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy or $C_4$-$C_{18}$ aryl; or $R_1$ and $R_2$ are linked to form a substituted or unsubstituted carbazole structure,
X is a halogen atom selected from the group consisting of F, Cl, Br and I,
n is 1 or 2, m is an integer of 3 to 5, l is 0 or 1, and n + m + l is an integer of 4 to 6.

In the present disclosure, the photocatalyst may be represented by the following Chemical Formula 2 or 3:

[Chemical Formula 2]

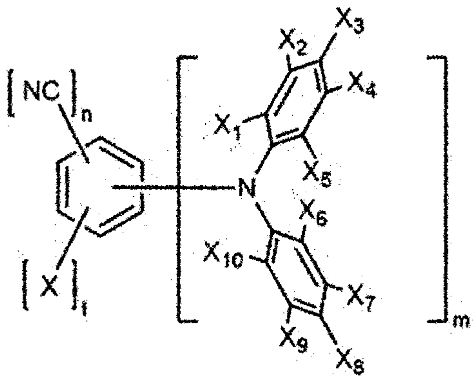

[Chemical Formula 3]

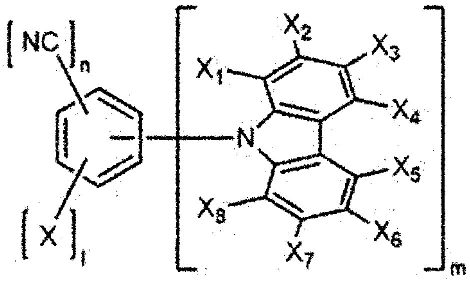

wherein, in Chemical Formula 2, $X_1$ to $X_{10}$ are each independently hydrogen, deuterium, a halogen atom, $-NO_2$, -CN, -COOR (where R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy or $C_4$-$C_{18}$ aryl;

wherein, in Chemical Formula 3, $X_1$ to $X_8$ are each independently hydrogen, deuterium, a halogen atom, $-NO_2$, -CN, -COOR (where R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy or $C_4$-$C_{18}$ aryl;

and wherein, in Chemical Formulae 2 and 3, X is each independently a halogen atom selected from the group consisting of F, Cl, Br and I, n is each independently 1 or 2, m each independently is an integer of 3 to 5, l is each independently 0 or 1, and n + m + l is each independently an integer of 4 to 6.

In the present disclosure, the molar ratio of the photocatalyst to the co-initiator may be in the range of 1:10 to 1:5,000.

In the present disclosure, the ionic co-initiator may comprise an anionic co-initiator and a cationic co-initiator.

In the present disclosure, the anionic co-initiator may be a borate salt compound, and preferably may be represented by the following Chemical Formula 4:

[Chemical Formula 4]

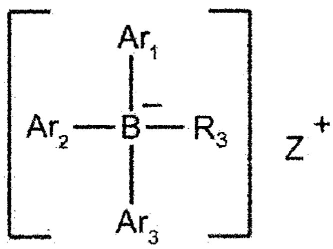

wherein, in Chemical Formula 4,

$R_3$ is a $C_1$-$C_{24}$ alkyl or $-CH_2SiR'_3$ (where R' is hydrogen or a $C_1$-$C_{24}$ alkyl),

$Ar_1$ to $Ar_3$ are each independently a substituted or unsubstituted $C_4$-$C_{18}$ aryl,

and $Z^+$ is $Li^+$, $K^+$, $Na^+$, $Rb^+$, or a substituted or unsubstituted safranin ion, pyrylium ion, cyanine ion, iodonium ion, sulfonium ion, phosphonium ion, or ammonium ion.

In the present disclosure, the cationic co-initiator may be at least one compound selected from the group consisting of an iodonium salt, a sulfonium salt, and a phosphonium salt.

Specifically, the cationic co-initiator may be an iodonium salt compound represented by the following Chemical Formula 6:

[Chemical Formula 6]

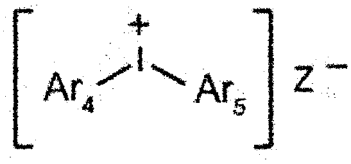

wherein, in Chemical Formula 6,

$Ar_4$ and $Ar_5$ are each independently a substituted or unsubstituted $C_4$-$C_{18}$ aryl,

and $Z^-$ is $PF_6^-$, $SbF_6^-$, $AsF_6^-$, $BF_4^-$, $(C_6F_5)_4B^-$, $Cl^-$, $Br^-$, $HSO_4^-$, $CF_3SO_3^-$, $FSO_3^-$, $CH_3SO_3^-$, $ClO_4^-$, $PO_4^-$, $NO_3^-$, $SO_4^-$, $CH_3SO_4^-$, or a substituted or unsubstituted $C_1$-$C_{20}$ alkylsulfonate, $C_2$-$C_{20}$ haloalkylsulfonate, $C_4$-$C_{10}$ arylsulfonate, camphorsulfonate, $C_1$-$C_{20}$ perfluoroalkylsulfonylmethide or $C_1$-$C_{20}$ perfluoroalkylsulfonylimide ion.

Specifically, the cationic co-initiator may be a sulfonium salt compound represented by the following Chemical Formula 7:

[Chemical Formula 7]

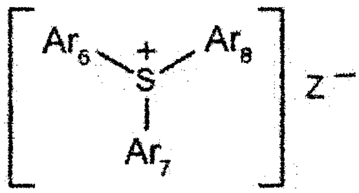

wherein, in Chemical Formula 7,

$Ar_6$ to $Ar_8$ are each independently a substituted or unsubstituted $C_4$-$C_{18}$ aryl,
and $Z^-$ is $PF_6^-$, $SbF_6^-$, $AsF_6^-$, $BF_4^-$, $(C_6F_5)_4B^-$, $Cl^-$, $Br^-$, $HSO_4^-$, $CF_3SO_3^-$, $FSO_3^-$, $CH_3SO_3^-$, $ClO_4^-$, $PO_4^-$, $NO_3^-$, $SO_4^-$, $CH_3SO_4^-$, or a substituted or unsubstituted $C_1$-$C_{20}$ alkylsulfonate, $C_2$-$C_{20}$ haloalkylsulfonate, $C_4$-$C_{10}$ arylsulfonate, camphorsulfonate, $C_1$-$C_{20}$ perfluoroalkylsulfonylmethide or $C_1$-$C_{20}$ perfluoroalkylsulfonylimide ion.

Specifically, the cationic co-initiator may be a phosphonium salt compound represented by the following Chemical Formula 8:

[Chemical Formula 8]

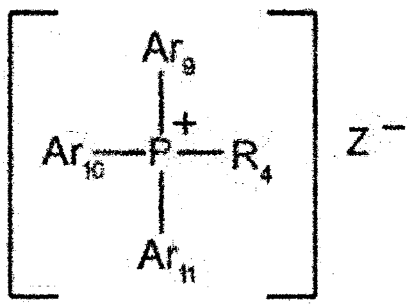

wherein, in Chemical Formula 8,

$R_4$ is hydrogen, deuterium, a halogen atom, $-NO_2$, -CN, -COOR, $-NRCOCH_3$, -SR, $-COONH_xR_{2-x}$, $NH_xR_{2-x}$, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy or $C_4$-$C_{18}$ aryl, where R is hydrogen or a $C_1$-$C_{24}$ alkyl, and x is an integer of 0 to 2;
$Ar_9$ to $Ar_{11}$ are each independently a substituted or unsubstituted $C_4$-$C_{18}$ aryl;
and $Z^-$ is $PF_6^-$, $SbF_6^-$, $AsF_6^-$, $BF_4^-$, $(C_6F_5)_4B^-$, $Cl^-$, $Br^-$, $HSO_4^-$, $CF_3SO_3^-$, $FSO_3^-$, $CH_3SO_3^-$, $ClO_4^-$, $PO_4^-$, $NO_3^-$, $SO_4^-$, $CH_3SO_4^-$, or a substituted or unsubstituted $C_1$-$C_{20}$ alkylsulfonate, $C_2$-$C_{20}$ haloalkylsulfonate, $C_4$-$C_{10}$ arylsulfonate, camphorsulfonate, $C_1$-$C_{20}$ perfluoroalkylsulfonylmethide or $C_1$-$C_{20}$ perfluoroalkylsulfonylimide ion.

The present disclosure also provides a photocurable composition using the photocatalyst composition.

The photocurable composition of the present disclosure comprises a polymerizable monomer having an ethylenically unsaturated bond, a photocatalyst having thermally activated delayed fluorescence property, and an ionic co-initiator.

In the present disclosure, the photocatalyst may be used in an amount of 0.00001 to 0.01 mol based on 100 mol of the polymerizable monomer.

The present disclosure also provides a method for preparing a photocured resin using the photocurable composition.

The method for preparing a photocured resin according to the present disclosure comprises a step of preparing a photocured resin by polymerizing a polymerizable monomer by irradiating visible light onto a photocurable composition

comprising a polymerizable monomer having an ethylenically unsaturated bond, a photocatalyst having thermally activated delayed fluorescence properties, and an ionic co-initiator.

In the present disclosure, the visible light irradiation may be performed for 1 to 240 seconds.

In the present disclosure, it is preferable to perform a degassing step using nitrogen gas before the visible light irradiation.

In the present disclosure, an additional step of irradiating visible light to the prepared resin may further be performed.

Specifically, a step of applying the prepared resin onto a substrate at a thickness of 1 μm to 8 mm, followed by a step of additionally irradiating visible light thereto, may further be performed.

[Advantageous Effects]

The photocatalyst composition of the present disclosure comprises a photocatalyst having thermally activated delayed fluorescence (TADF) properties and an ionic co-initiator, and can form a photoinitiating system exhibiting excellent radical generation efficiency even with a small amount of the photocatalyst through the combined use and compositional optimization of these components. Accordingly, when a monomer is polymerized using the photocatalyst composition of the present disclosure, a photocured resin with an excellent polymerization rate can be prepared, and deep curing is also enabled due to the small amount of the photocatalyst. In addition, since the present disclosure initiates the polymerization reaction using visible light, curing within matrices that are impermeable to UV light becomes possible, and despite absorption of visible light, a resin exhibiting high transparency can be prepared.

[Description of Drawings]

FIG. 1 is a graph showing the conversion rate of the resin according to visible light irradiation intensity and time under a condition in which the equivalent of the photocatalyst is 10 ppm, in accordance with an embodiment of the present disclosure.

FIG. 2 is a graph showing the conversion rate of the resin according to visible light irradiation intensity and time under a condition in which the equivalent of the photocatalyst is 1 ppm, in accordance with an embodiment of the present disclosure.

FIG. 3 is a graph showing the conversion rate of the resin according to visible light irradiation intensity and time under a condition in which the equivalent of the anionic co-initiator is 200 ppm, in accordance with an embodiment of the present disclosure.

FIG. 4 is a graph showing the conversion rate of the resin according to visible light irradiation intensity and time under a condition in which the equivalent of the anionic co-initiator is 300 ppm, in accordance with an embodiment of the present disclosure.

FIG. 5 is a graph showing the conversion rate of the film resin according to the second visible light irradiation time, in accordance with an embodiment of the present disclosure.

[Best Mode for Invention]

Hereinafter, specific embodiments of the present disclosure will be described in more detail. Unless otherwise defined, all technical and scientific terms used in the present specification have the same meaning as commonly understood by one of ordinary skill in the art to which the present disclosure pertains. In general, the nomenclature used in the present specification is well known and commonly used in the art.

In describing the present disclosure, "substitution" of a functional group refers to the replacement of one or more hydrogen atoms within the functional group by another substituent. For example, one or more hydrogen atoms may each independently be substituted with deuterium, a halogen atom, a nitro group ($-NO_2$), a cyano group (-CN), -COOR, $-NRCOCH_3$, -SR, $-COONH_xR_{2-x}$, $NH_xR_{2-x}$, $-CONH_xR_{2-x}$, -OR, -SR, -SOR, -SOOR, $-NH_xR_{2-x}$, $-PH_xR_{2-x}$, $-P(OR)_2$, a $C_1$-$C_{24}$ alkyl, a $C_2$-$C_{24}$ alkenyl, a $C_2$-$C_{24}$ alkynyl, a $C_1$-$C_{24}$ alkoxy, or a $C_4$-$C_{18}$ aryl. Here, "R" is used to describe the bonding form of the substituent and is not particularly limited, and may, for example, be a hydrocarbon group such as hydrogen, a $C_1$-$C_{24}$ alkyl, a $C_2$-$C_{24}$ alkenyl, a $C_2$-$C_{24}$ alkynyl, or a $C_4$-$C_{18}$ aryl.

In the present disclosure, the alkyl refers to a hydrocarbon group having single bonds only (e.g., methyl, ethyl, n-propyl, isopropyl, n-butyl, isobutyl, tert-butyl, sec-butyl, 1-methylbutyl, 1-ethylbutyl, n-pentyl, isopentyl, neopentyl, tert-pentyl, n-hexyl, 1-methylpentyl, 2-methylpentyl, 4-methyl-2-pentyl, 3,3-dimethylbutyl, 2-ethylbutyl, n-heptyl, 1-methylhexyl, cyclopentylmethyl, cyclohexylmethyl, n-octyl, tert-octyl, 1-methylheptyl, 2-ethylhexyl, 2-propylpentyl, n-nonyl, 2,2-dimethylheptyl, 1-ethylpropyl, 1,1-dimethylpropyl, isohexyl, 2-methylpentyl, 4-methylhexyl, 5-methylhexyl, etc.); the

alkenyl refers to a hydrocarbon group comprising one or more double bonds (e.g., vinyl, allyl, etc.); the alkynyl refers to a hydrocarbon group comprising one or more triple bonds (e.g., ethynyl, propynyl, etc.); and the aryl refers to a hydrocarbon group having one or more aromatic rings (e.g., phenyl, biphenyl, naphthyl, anthracyl, phenanthryl, terphenyl, fluorenyl, furan, pyrrolyl, thiophenyl, thiazolyl, etc.).

In describing the present disclosure, the alkyl, alkenyl, alkynyl, or aryl is interpreted to include not only functional groups consisting of carbon and hydrogen atoms, but also heteroalkyl, heteroalkenyl, heteroalkynyl, or heteroaryl groups in which one or more carbon atoms are substituted with nitrogen, oxygen, or sulfur atoms. In addition, the alkyl, alkenyl, and alkynyl are intended to include linear, branched, and cyclic forms.

The present disclosure relates to a photocatalyst composition, a photocurable composition comprising the same, and a method for preparing a photocured resin using the same.

The photocatalyst composition of the present disclosure forms a photoinitiating system by comprising a photocatalyst capable of electron transfer with a free radical-generating substance in the resin after light absorption, and a co-initiator. Accordingly, due to the electron transfer, the catalyst is regenerated and can be used repeatedly. Thus, unlike conventional photoinitiators, the polymerization reaction can be initiated with a small amount of photocatalyst, and the penetration depth can be increased, thereby enabling deep curing. In addition, since the photoinitiating system is activated by visible light, curing is possible even within matrices that are impermeable to UV light, and a resin having high transparency can be obtained despite the absorption of visible light.

The photocatalyst used in the present disclosure absorbs light in the visible region, particularly in the wavelength range of 400 to 600 nm, and exhibits thermally activated delayed fluorescence (TADF) emission properties.

In a conventional fluorescence mechanism, three out of four excitons are triplet excitons and are lost, resulting in low light efficiency. In contrast, the TADF mechanism can upconvert the three triplet excitons to singlet excitons for emission, thereby allowing all four excitons to emit light and exhibiting significantly improved light efficiency.

In the present disclosure, the photocatalyst may be a cyanoarene-based compound having thermally activated delayed fluorescence properties.

Specifically, the cyanoarene-based photocatalyst may be a compound represented by the following Chemical Formula 1:

[Chemical Formula 1]

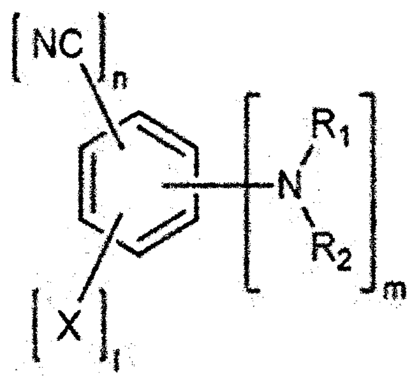

In Chemical Formula 1, $R_1$ and $R_2$ are each independently hydrogen, deuterium, a halogen atom, a nitro group ($-NO_2$), a cyano group (-CN), -COOR (where R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl; or $R_1$ and $R_2$ may be linked to form a substituted or unsubstituted carbazole structure. Preferably, $R_1$ and $R_2$ are each independently a substituted or unsubstituted $C_6$-$C_{18}$ aryl, or may be linked to form a substituted or unsubstituted carbazole structure.

In Chemical Formula 1, X is a halogen atom selected from the group consisting of F, Cl, Br, and I, and preferably, X may be F.

In Chemical Formula 1, n is 1 or 2, m is an integer of 3 to 5, l is 0 or 1, and n + m + l is an integer of 4 to 6. Preferably, in Chemical Formula 1, n is 1 or 2, m is 3 or 4, l is 0 or 1, and n + m + l may be 5 or 6.

In one embodiment of the present disclosure, the photocatalyst of Chemical Formula 1 may be represented by the following Chemical Formula 2:

[Chemical Formula 2]

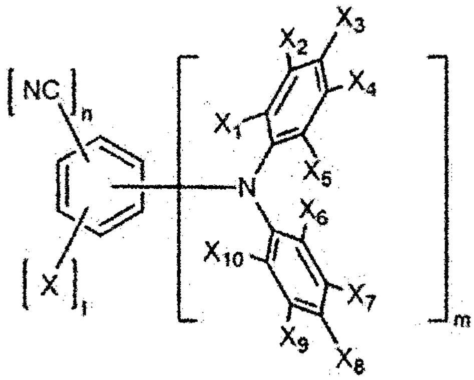

In Chemical Formula 2, $X_1$ to $X_{10}$ are each independently hydrogen, deuterium, a halogen atom, $-NO_2$, -CN, -COOR (where R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl. Preferably, $X_1$ to $X_{10}$ are each independently hydrogen, a halogen atom, a cyano group, or a substituted or unsubstituted $C_1$-$C_4$ alkyl or $C_1$-$C_4$ alkoxy.

The definition of X, and the definitions of n, m, and l in Chemical Formula 2 are as defined above in Chemical Formula 1.

In one embodiment of the present disclosure, the photocatalyst of Chemical Formula 1 may be represented by the following Chemical Formula 3:

[Chemical Formula 3]

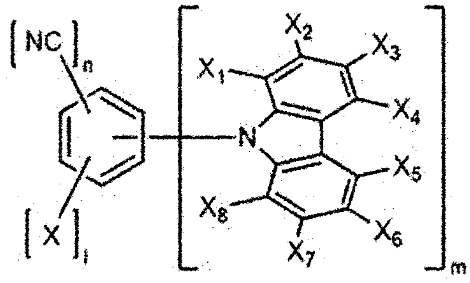

In Chemical Formula 3, $X_1$ to $X_8$ are each independently hydrogen, deuterium, a halogen atom, $-NO_2$, -CN, -COOR (where R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy or $C_4$-$C_{18}$ aryl. Preferably, $X_1$ to $X_8$ are each independently hydrogen, a halogen atom, a cyano group, or a substituted or unsubstituted $C_1$-$C_4$ alkyl or $C_1$-$C_4$ alkoxy.

The definition of X, and the definitions of n, m, and l in Chemical Formula 3 are as defined above in Chemical Formula 1.

In an exemplary embodiment of the present disclosure, at least one compound selected from 2,4,5,6-tetrakis(diphenylamino)isophthalonitrile (4DP-IPN), 2,4,5,6-tetrakis(carbazol-9-yl)isophthalonitrile (4Cz-IPN), 2,4,5,6-tetrakis(3,6-di-tert-butylcarbazol-9-yl)isophthalonitrile (4tCz-IPN), 2,4,6-tris(diphenylamino)-5-fluoroisophthalonitrile (3DP-F-IPN), 2,4,6-tris(carbazol-9-yl)-5-fluoroisophthalonitrile (3Cz-F-IPN), 2,4,5,6-tetrakis[bis(4-methoxyphenyl)amino]isophthalonitrile (4DMDP-IPN), 2,4,5,6-tetrakis[bis(4-cyanophenyl)amino]isophthalonitrile (4DCDP-IPN), and 2,3,5,6-tetrakis(diphenylamino)benzonitrile (4DP-BN) may be used as the photocatalyst. Preferably, at least one compound selected from the group consisting of 4DP-IPN, 3DP-F-IPN, and 4DCDP-IPN may be used as the photocatalyst. In this regard, in the examples of the present disclosure, when various types of photocatalysts were used to form a photoinitiating system, it was confirmed that the use of 4DP-IPN, 3DP-F-IPN, or 4DCDP-IPN resulted in further improvement in the conversion rate.

The structures of each of the above-mentioned compounds may be represented as follows:

[4DP-IPN]

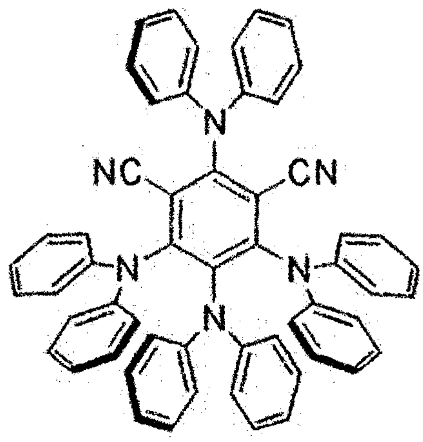

[4Cz-IPN]

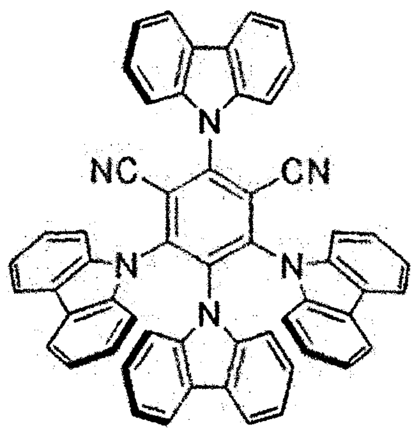

[4tCz-IPN]

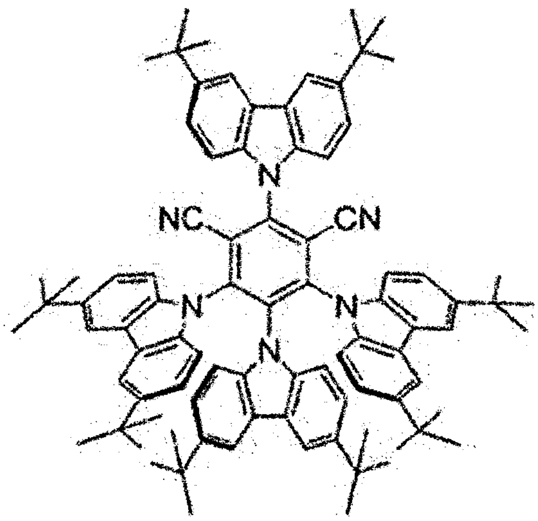

[3DP-F-IPN]

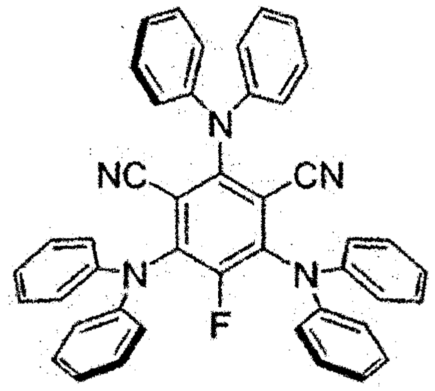

[3Cz-F-IPN]

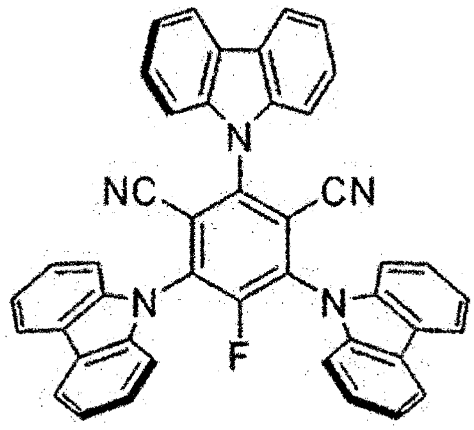

[4DMDP-IPN]

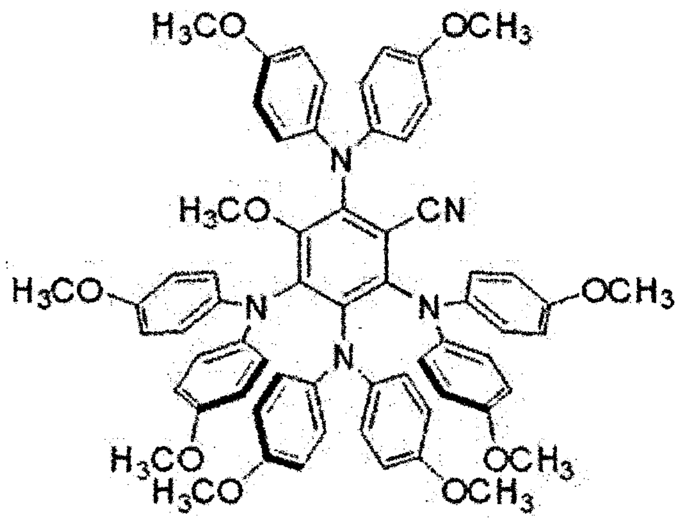

[4DCDP-IPN]

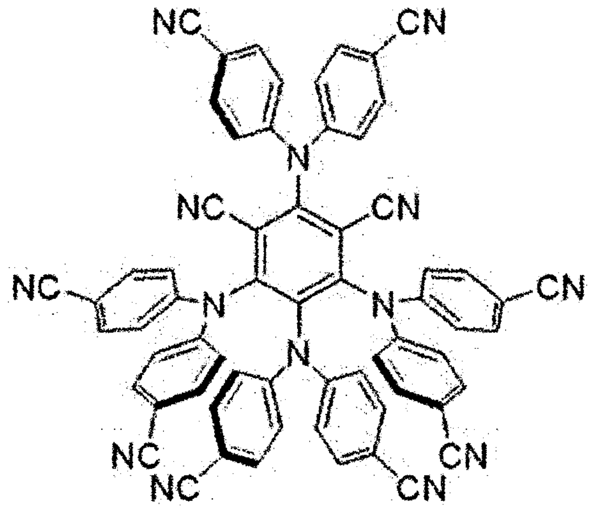

[4DP-BN]

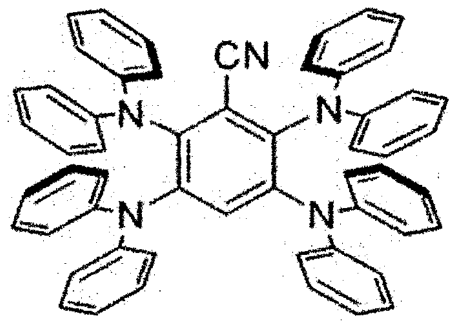

In the present disclosure, the co-initiator is an ionic substance that induces the polymerization reaction of a monomer by forming a radical through a dissociation mechanism. The present disclosure is characterized in that the polymerization efficiency is improved by the combined use of a photocatalyst, particularly a cyanoarene-based photocatalyst having thermally activated delayed fluorescence (TADF) properties, and a co-initiator.

In the photoinitiating system using the present disclosure, the photocatalyst efficiently forms an excited triplet state via intersystem crossing between singlet and triplet states after light absorption. The excited photocatalyst can generate a radical ionic species of the co-initiator through a redox reaction with the co-initiator, and the radical ionic co-initiator generated by electron transfer can form an alkyl or aryl radical having high reactivity for participation in polymerization through bond dissociation.

The co-initiator may be classified into an anionic substance and a cationic substance, and in the present disclosure, the co-initiator may comprise an anionic co-initiator, a cationic co-initiator, or both, and preferably may comprise both an anionic co-initiator and a cationic co-initiator.

In the present disclosure, the anionic co-initiator may comprise at least one borate salt.

As the anionic co-initiator, a structure in which at least one substituted or unsubstituted $C_4$-$C_{18}$ aryl group is bonded to a boron atom in the borate salt may be used. Specifically, the anionic co-initiator may be represented by the following Chemical Formula 4:

[Chemical Formula 4]

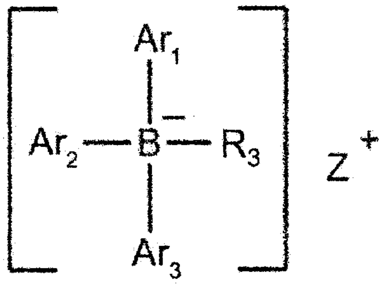

In Chemical Formula 4, $R_3$ is a $C_1$-$C_{24}$ alkyl or $-CH_2SiR'_3$(where R' is hydrogen or a $C_1$-$C_{24}$ alkyl), and preferably, $R_3$ may be a $C_1$-$C_6$ alkyl. In addition, $Ar_1$ to $Ar_3$ are each independently a substituted or unsubstituted $C_4$-$C_{18}$ aryl, and preferably may be a substituted or unsubstituted $C_6$-$C_{12}$ aryl.

In Chemical Formula 4, $Z^+$ is $Li^+$, $K^+$, $Na^+$, $Rb^+$, or a substituted or unsubstituted safranin ion, pyrylium ion, cyanine ion, iodonium ion, sulfonium ion, phosphonium ion, or ammonium ion, and preferably may be an ammonium ion.

In one embodiment of the present disclosure, the anionic co-initiator may be a co-initiator having the structure represented by the following Chemical Formula 5:

[Chemical Formula 5]

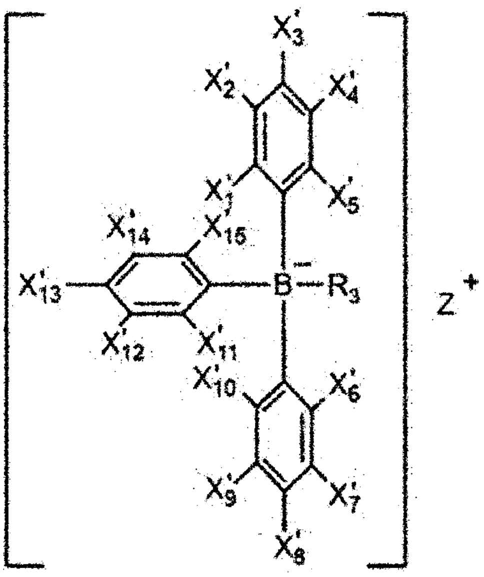

In Chemical Formula 5, $R_3$ is a $C_1$-$C_{24}$ alkyl or $-CH_2SiR'_3$, and R' is hydrogen or a $C_1$-$C_{24}$ alkyl. Preferably, $R_3$ may be a $C_1$-$C_6$ alkyl.

In Chemical Formula 5, $X'_1$ to $X'_{15}$ are each independently hydrogen, deuterium, a halogen atom, $-NO_2$, -CN, -COOR, $-NRCOCH_3$, -SR, $-COONH_xR_{2-x}$, $NH_xR_{2-x}$, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy or $C_4$-$C_{18}$ aryl; R is hydrogen or a $C_1$-$C_{24}$ alkyl; and x is an integer of 0 to 2. Preferably, $X'_1$ to $X'_{15}$ are each independently hydrogen or a substituted or unsubstituted $C_1$-$C_4$ alkyl.

In Chemical Formula 5, $Z^+$ is $Li^+$, $K^+$, $Na^+$, $Rb^+$, or a substituted or unsubstituted safranin ion, pyrylium ion, cyanine ion, iodonium ion, sulfonium ion, phosphonium ion or ammonium ion, and preferably may be an ammonium ion.

In an exemplary embodiment of the present disclosure, at least one compound selected from the group consisting of [2-(butanoyloxy)ethyl]trimethylazanium butyltriphenylborate, tetrabutylammonium butyltriphenylborate, tetramethylammonium methyl(biphenyl)dimesitylborate, tetramethylammonium methyl(1-naphthyl)dimesitylborate, tetrabutylammonium butyltrinaphthylborate, tetramethylammonium butyl(1-naphthyl)dimesitylborate, tetradodecylammonium methyl(1-naphthyl)dimesitylborate, tetramethylammonium methyl(1-naphthyl)dimesitylborate, tetramethylammonium butyl(1-naphthyl)dichloromesitylborate, cyanine butyl(1-naphthyl)dichloromesitylborate, tetramethylammonium methyl(2-naphthyl)dimesitylborate, tetramethylammonium butyl(2-naphthyl)dimesitylborate, tetramethylammonium methyl(9-anthracyl)bis(2-methylphenyl)borate, tetramethylammonium butyl(9-anthracyl)bis(2-methylphenyl)borate, tetramethylammonium butyl(9-phenanthryl)dimesitylborate, tetramethylammonium butyl(9-phenanthryl)dichloromesitylborate, tetramethylammonium butyl(9-phenanthryl)bis(dichloromesityl)borate, tetramethylammonium butyl(1-pyrenyl)dimesitylborate, tetramethylammonium butyl(1-pyrenyl)dichloromesitylborate, tetramethylammonium methyl(biphenyl) bis(dichloromesityl)borate, iodonium hexyltris(3-fluorophenyl)borate, pyrylium hexyltris(3-fluorophenyl)borate, and safranin hexyltris(3-fluorophenyl)borate may be used as the anionic co-initiator.

In the present disclosure, the cationic co-initiator may comprise at least one compound selected from the group consisting of iodonium salts, sulfonium salts, and phosphonium salts.

Specifically, the cationic co-initiator may have a structure in which one or more substituted or unsubstituted aryl groups are bonded to a central atom, which is iodine (I), sulfur (S), or phosphorus (P) in the case of iodonium salts, sulfonium salts, and phosphonium salts, respectively. The iodonium, sulfonium, and phosphonium co-initiators may be represented by Chemical Formulae 6 to 8, respectively:

[Chemical Formula 6]

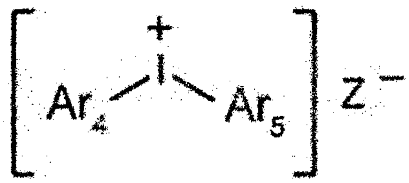

[Chemical Formula 7]

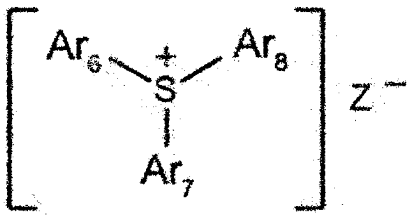

[Chemical Formula 8]

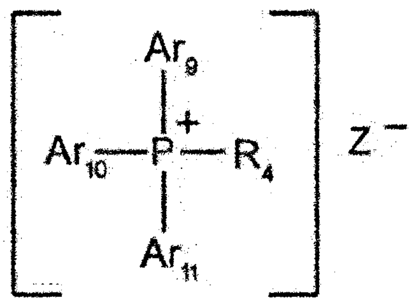

In Chemical Formulae 6 to 8, $Ar_4$ to $Ar_{11}$ are each independently a substituted or unsubstituted $C_4$-$C_{18}$ aryl, and preferably may be a substituted or unsubstituted $C_6$-$C_{12}$ aryl.

In addition, in Chemical Formula 8, $R_4$ is each independently hydrogen, deuterium, a halogen atom, $-NO_2$, -CN, -COOR, $-NRCOCH_3$, -SR, $-COONH_xR_{2-x}$, $NH_xR_{2-x}$, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy or $C_4$-$C_{18}$ aryl; R is hydrogen or a $C_1$-$C_{24}$ alkyl; and x is an integer from 0 to 2.

In Chemical Formulae 6 to 8, $Z^-$ is $PF_6^-$, $SbF_6^-$, $AsF_6^-$, $BF_4^-$, $(C_6F_5)_4B^-$, $Cl^-$, $Br^-$, $HSO_4^-$, $CF_3SO_3^-$, $FSO_3^-$, $CH_3SO_3^-$, $ClO_4^-$, $PO_4^-$, $NO_3^-$, $SO_4^-$, $CH_3SO_4^-$, or a substituted or unsubstituted $C_1$-$C_{20}$ alkylsulfonate, $C_2$-$C_{20}$ haloalkylsulfonate, $C_6$-$C_{10}$ arylsulfonate, camphorsulfonate, $C_1$-$C_{20}$ perfluoroalkylsulfonylmethide or $C_1$-$C_{20}$ perfluoroalkylsulfonylimide ion.

In one embodiment of the present disclosure, the iodonium salt co-initiator may be a compound represented by

Chemical Formula 9:

[Chemical Formula 9]

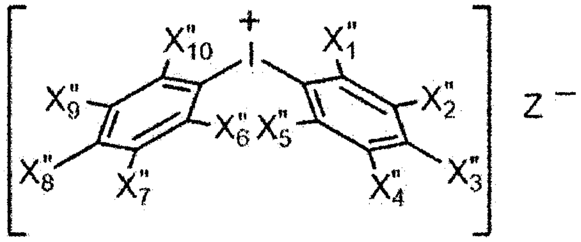

In Chemical Formula 9, $X''_1$ to $X''_{10}$ are each independently hydrogen, deuterium, a halogen atom, $-NO_2$, -CN, -COOR, $-NRCOCH_3$, -SR, $-COONH_xR_{2-x}$, $-NH_xR_{2-x}$, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy or $C_4$-$C_{18}$ aryl; R is hydrogen or a $C_1$-$C_{24}$ alkyl; and x is an integer from 0 to 2.

In Chemical Formula 9, $Z^-$ is $PF_6^-$, $SbF_6^-$, $AsF_6^-$, $BF_4^-$, $(C_6F_5)_4B^-$, $Cl^-$, $Br^-$, $HSO_4^-$, $CF_3SO_3^-$, $FSO_3^-$, $CH_3SO_3^-$, $ClO_4^-$, $PO_4^-$, $NO_3^-$, $SO_4^-$, $CH_3SO_4^-$, or a substituted or unsubstituted $C_1$-$C_{20}$ alkylsulfonate, $C_2$-$C_{20}$ haloalkylsulfonate, $C_4$-$C_{10}$ arylsulfonate, camphorsulfonate, $C_1$-$C_{20}$ perfluoroalkylsulfonylmethide or $C_1$-$C_{20}$ perfluoroalkylsulfonylimide ion.

In an exemplary embodiment of the present disclosure, at least one compound selected from the group consisting of diphenyliodonium hexafluorophosphate, (4-methylphenyl)(4-(2-methylpropyl)phenyl)iodonium hexafluorophosphate, bis(4-methylphenyl)iodonium hexafluorophosphate, bis(dodecylphenyl)iodonium hexafluorophosphate, bis(4-hexylphenyl)iodonium hexafluoroantimonate, bis(4-hexylphenyl)iodonium hexafluorophosphate, (4-hexylphenyl) phenyl iodonium hexafluoroantimonate, (4-hexylphenyl)phenyl iodonium hexafluorophosphate, [4-(octyloxy)phenyl] (phenyl)iodonium hexafluoroantimonate, bis(4-octylphenyl)iodonium hexafluoroantimonate, (4-sec-butylphenyl)-(4'-methylphenyl)iodonium hexafluorophosphate, (4-isopropylphenyl)-(4'-methylphenyl)iodonium hexafluorophosphate, bis(4-octylphenyl)iodonium hexafluorophosphate, (4-octylphenyl)phenyl iodonium hexafluoroantimonate, (4-octylphenyl)phenyl iodonium hexafluorophosphate, bis(4-decylphenyl)iodonium hexafluoroantimonate, bis(4-decylphenyl)iodonium hexafluorophosphate, (4-decylphenyl)phenyl iodonium hexafluoroantimonate, (4-decylphenyl)phenyl iodonium hexafluorophosphate, bis(4-hexylphenyl)iodonium tetrafluoroborate, (4-hexylphenyl)phenyl iodonium tetrafluoroborate, bis(4-octylphenyl) tetrafluoroborate, (4-octylphenyl)phenyl iodonium tetrafluoroborate, bis(4-decylphenyl)iodonium tetrafluoroborate, (4-decylphenyl)phenyl iodonium tetrafluoroborate, bis(4-methoxyphenyl)iodonium bromide, (4-methoxyphenyl)phenyl iodonium trifluoromethanesulfonate, bis(4-phenoxyphenyl)iodonium tetrafluoroborate, bis(3-methoxysulfonylphenyl)iodonium hexafluorophosphate, bis(4-fluorophenyl)iodonium trifluoromethanesulfonate, bis(4-bromophenyl)iodonium trifluoromethanesulfonate, bis(4-chlorophenyl)iodonium hexafluorophosphate, bis(2,4-dichlorophenyl)iodonium hexafluorophosphate, bis(4-iodophenyl)iodonium tetrafluoroborate, di(3-carboxyphenyl)iodonium hexafluorophosphate, di(3-methoxycarbonylphenyl)iodonium hexafluorophosphate, di(4-acetamidophenyl)iodonium hexafluorophosphate, (4-nitrophenyl)phenyl iodonium nitrate, bis(3-nitrophenyl)iodonium nitrate, and dinaphthyliodonium tetrafluoroborate may be used as the iodonium salt co-initiator.

In one embodiment of the present disclosure, the sulfonium salt co-initiator may be a compound of the following Chemical Formula 10:

[Chemical Formula 10]

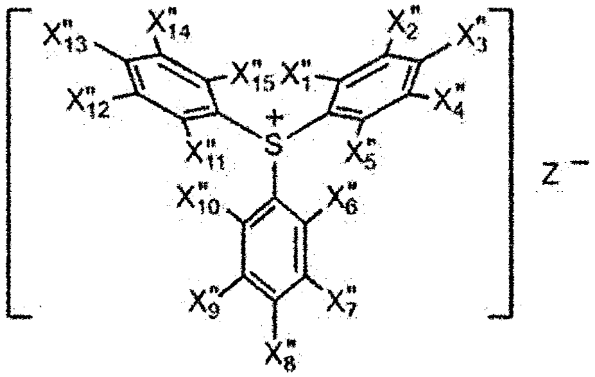

In Chemical Formula 10, X"$_1$ to X"$_{15}$ are each independently hydrogen, deuterium, a halogen atom, $-NO_2$, -CN, -COOR, $-NRCOCH_3$, -SR, $-COONH_xR_{2-x}$, $-NHxR_{2-x}$, or substituted or unsubstituted $C_1$-$C_{24}$ alkyl, $C_2$-$C_{24}$ alkenyl, $C_2$-$C_{24}$ alkynyl, $C_1$-$C_{24}$ alkoxy or $C_4$-$C_{18}$ aryl, R is hydrogen or $C_1$-$C_{24}$ alkyl, and x is an integer from 0 to 2.

In Chemical Formula 10, $Z^-$ is $PF_6^-$, $SbF_6^-$, $AsF_6^-$, $BF_4^-$, $(C_6F_5)_4B^-$, $Cl^-$, $Br^-$, $HSO_4^-$, $CF_3SO_3^-$, $FSO_3^-$, $CH_3SO_3^-$, $ClO_4^-$, $PO_4^-$, $NO_3^-$, $SO_4^-$, $CH_3SO_4^-$, or a substituted or unsubstituted $C_1$-$C_{20}$ alkylsulfonate, $C_2$-$C_{20}$ haloalkylsulfonate, $C_4$-$C_{10}$ arylsulfonate, camphorsulfonate, $C_1$-$C_{20}$ perfluoroalkylsulfonylmethide or $C_1$-$C_{20}$ perfluoroalkylsulfonylimide ion.

In an exemplary embodiment of the present disclosure, at least one compound selected from triphenylsulfonium hexafluoroantimonate, triphenylsulfonium hexafluorophosphate, and diphenyl-4-methylsulfonium trifluoromethanesulfonate may be used as the sulfonium salt co-initiator.

In one embodiment of the present disclosure, the phosphonium salt co-initiator may be a compound of the following Chemical Formula 11:

[Chemical Formula 11]

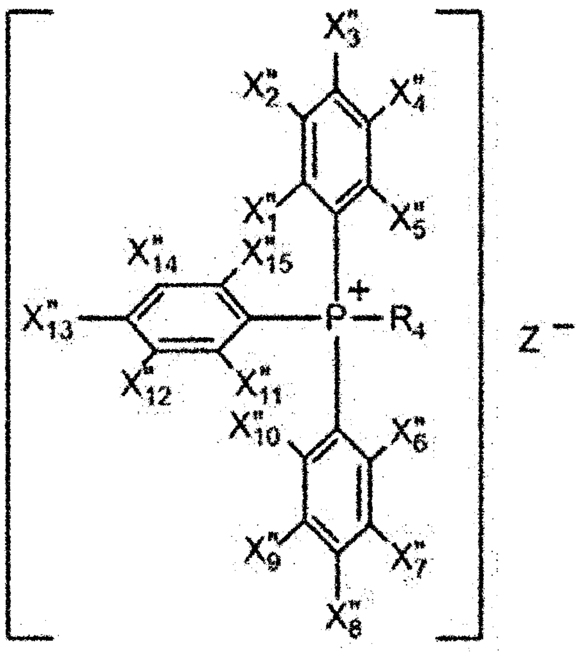

In Chemical Formula 11, $R_4$ and X"$_1$ to X"$_{15}$ are each independently hydrogen, deuterium, a halogen atom, $-NO_2$, -CN, -COOR, $-NRCOCH_3$, -SR, $-COONH_xR_{2-x}$, $-NH_xR_{2-x}$, or substituted or unsubstituted $C_1$-$C_{24}$ alkyl, $C_2$-$C_{24}$ alkenyl, $C_2$-$C_{24}$ alkynyl, $C_1$-$C_{24}$ alkoxy or $C_4$-$C_{18}$ aryl, R is hydrogen or $C_1$-$C_{24}$ alkyl, and x is an integer from 0 to 2.

In Chemical Formula 11, $Z^-$ is $PF_6^-$, $SbF_6^-$, $AsF_6^-$, $BF_4^-$, $(C_6F_5)_4B^-$, $Cl^-$, $Br^-$, $HSO_4^-$, $CF_3SO_3^-$, $FSO_3^-$, $CH_3SO_3^-$,

$ClO_4^-$, $PO_4^-$, $NO_3^-$, $SO_4^-$, $CH_3SO_4^-$, or a substituted or unsubstituted $C_1$-$C_{20}$ alkylsulfonate, $C_2$-$C_{20}$ haloalkylsulfonate, $C_4$-$C_{10}$ arylsulfonate, camphorsulfonate, $C_1$-$C_{20}$ perfluoroalkylsulfonylmethide or $C_1$-$C_{20}$ perfluoroalkylsulfonylimide ion.

In an exemplary embodiment of the present disclosure, at least one compound selected from ethyltriphenylphosphonium hexafluoroantimonate and tetraphenylphosphonium hexafluoroantimonate may be used as the phosphonium salt co-initiator.

In the present disclosure, the molar ratio of the photocatalyst to the total co-initiator may range from 1:10 to 1:5,000, preferably from 1:50 to 1:3,000, and more preferably from 1:70 to 1:1,500.

In the present disclosure, it is preferable to use a combination of an anionic co-initiator and a cationic co-initiator together with the photocatalyst having thermally activated delayed fluorescence (TADF) properties, as an optimized combination of the photocatalyst and the co-initiators. In this case, the radical generation efficiency of the photoinitiating system is significantly higher than that of conventional photoinitiators, and therefore, when the photoinitiating system is applied to a polymerizable monomer and irradiated with light, it can exhibit an excellent polymerization rate.

When combining the anionic co-initiator and the cationic co-initiator as described above, the molar ratio of the photocatalyst to the anionic co-initiator may range from 1:5 to 1:2,000, preferably from 1:10 to 1:1,000, and more specifically from 1:50 to 1:500. The molar ratio of the photocatalyst to the cationic co-initiator may range from 1:5 to 1:3,000, preferably from 1:10 to 1:2,000, and more preferably from 1:20 to 1:1,000.

The photoinitiating system using the photocatalyst composition of the present disclosure can induce an effective photopolymerization reaction even with a very small amount of photocatalyst, and enables deep curing. Furthermore, since the photoinitiating system is activated by visible light, curing is possible even within a matrix where UV penetration is not feasible, and a resin having high transparency can be produced even though it absorbs visible light.

Accordingly, the present disclosure also provides a photocurable composition comprising the photocatalyst composition and a polymerizable monomer.

In the present disclosure, the polymerizable monomer refers to a monomer having an ethylenically unsaturated bond, and upon irradiation with light, a polymerization reaction occurs between the monomers due to radicals generated by the photoinitiating system formed by the photocatalyst composition of the present disclosure, thereby forming a cured resin.

By way of example, the polymerizable monomer used in the present disclosure may be represented by the following Chemical Formula 12:

[Chemical Formula 12]

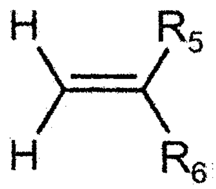

In Chemical Formula 12, $R_5$ is hydrogen, deuterium, a halogen atom, or a substituted or unsubstituted $C_1$-$C_4$ alkyl, and $R_6$ is hydrogen, deuterium, a halogen atom, -CN, -COOR", $-CONH_xR"_{2-x}$, -OR", -SR", -SOR", -SOOR", $-NH_xR"_{2-x}$, $-PH_xR"_{2-x}$, $-P(OR")_2$, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy or $C_4$-$C_{18}$ aryl, R" is hydrogen or a substituted or unsubstituted $C_1$-$C_{24}$ alkyl, $C_2$-$C_{24}$ alkenyl, $C_2$-$C_{24}$ alkynyl or $C_6$-$C_{18}$ aryl, and x is an integer from 0 to 2.

In an exemplary embodiment of the present disclosure, the polymerizable monomer may be a (meth)acrylate or (meth)acrylamide compound, wherein the term "(meth)acryl" is used to refer to both acryl and methacryl.

Specifically, at least one compound selected from the group consisting of methyl (meth)acrylate, ethyl (meth) acrylate, propyl (meth)acrylate, isopropyl (meth)acrylate, lauryl (meth)acrylate, 2-ethylhexyl (meth)acrylate, dicyclopentadiene (meth)acrylate, dicyclopentenyl oxyethyl (meth)acrylate, dicyclopentenyl (meth)acrylate, isobornyl (meth)acrylate, (meth)acrylamide, N,N-dimethyl(meth)acrylamide, (meth)acryloylmorpholine, isobutoxymethyl(meth)acrylamide, t-octyl (meth)acrylamide, diacetone(meth)acrylamide, ethyldiethylene glycol (meth)acrylate, polyethylene glycol mono(meth)acrylate, polypropylene glycol mono(meth)acrylate, bornyl(meth)acrylate, methyltriethylene glycol (meth) acrylate, ethylene glycol di(meth)acrylate, dicyclopentenyl di(meth)acrylate, triethylene glycol diacrylate, tetraethylene glycol di(meth)acrylate, tricyclodecane-diyl dimethylene di(meth)acrylate, tris(2-hydroxyethyl)isocyanurate di(meth)acrylate, tris(2-hydroxyethyl)isocyanurate tri(meth)acrylate, trimethylolpropane tri(meth)acrylate, tripropylene glycol di(meth)acrylate, neopentyl glycol di(meth)acrylate, 1,4-butanediol di(meth)acrylate, 1,6-hexanediol di(meth)acrylate,

pentaerythritol tri(meth)acrylate, pentaerythritol tetra(meth)acrylate, polyester di(meth)acrylate, polyethylene glycol di(meth)acrylate, dipentaerythritol penta(meth)acrylate, dipentaerythritol tetra(meth)acrylate, trimethylolpropane tetra(meth)acrylate, tetrachlorophenyl (meth)acrylate, 2-tetrachlorophenoxyethyl (meth)acrylate, tetrahydrofurfuryl (meth)acrylate, tetrabromophenyl (meth)acrylate, 2-tetrabromophenoxyethyl (meth)acrylate, 2-trichlorophenoxyethyl (meth)acrylate, tribromophenyl (meth)acrylate, 2-tribromophenoxyethyl (meth)acrylate, 2-hydroxyethyl (meth)acrylate, 2-hydroxypropyl (meth)acrylate, phenoxyethyl (meth)acrylate, butoxyethyl (meth)acrylate, pentachlorophenyl (meth) acrylate, and pentabromophenyl (meth)acrylate may be used as the polymerizable monomer.

In the photocurable composition of the present disclosure, the amount of the photocatalyst may be 0.00001 to 0.01 mol based on 100 mol of the polymerizable monomer, and preferably may be 0.0001 to 0.005 mol. In this manner, according to the present disclosure, photopolymerization can be efficiently carried out even with a very small amount of photocatalyst relative to the monomer, and deep curing is possible.

The photocurable composition of the present disclosure may further comprise, in addition to the above components, one or more additional components such as a radical curable component, a free radical photoinitiator, or a photosensitizer, if necessary.

When visible light is irradiated onto the photocurable composition of the present disclosure, a photocured resin can be obtained.

Specifically, when visible light is irradiated onto the photocurable composition, polymerization between the polymerizable monomers occurs by the photoinitiating system formed by the photocatalyst composition of the present disclosure, thereby forming a resin in the form of a cured product.

The method for preparing the photocured resin of the present disclosure comprises a step of preparing the photocured resin by polymerizing the polymerizable monomer by irradiating visible light to the photocurable composition comprising the polymerizable monomer, the photocatalyst, and the co-initiator.

A bulk-form polymer resin may be obtained by irradiating visible light while the above composition is in a mixed state, or a film-form polymer resin may be prepared by applying the mixture onto a substrate and then irradiating visible light. In this case, a method of applying the mixture onto a release liner and removing the release liner after the resin is formed to obtain a film may be used, or it is also possible to directly apply the mixture onto a target object to which the film is to be applied, thereby forming a film.

In the present disclosure, it is preferable to further comprise a step of degassing with nitrogen gas before irradiating visible light onto the mixture. In one embodiment of the present disclosure, it was confirmed that when photopolymerization is performed in a nitrogen atmosphere by removing oxygen through a degassing process, the photopolymerization efficiency is remarkably superior compared to that in a normal air atmosphere.

In the step of visible light irradiation, the light irradiation may be performed for 1 to 240 seconds, preferably for 2 to 120 seconds, and more preferably for 4 to 100 seconds. By using the photocatalyst composition of the present disclosure, an excellent polymerization rate can be achieved even when a small amount of photocatalyst is used in the photoinitiating system and the irradiation time is short.

In the visible light irradiation step, the light irradiation intensity may be $1mW/cm^2$ to $1W/cm^2$, preferably 10 to $100mW/cm^2$. If the intensity of the irradiated light is too low, the polymerization reaction may not be properly initiated, and if the intensity is too high, the concentration of radicals generated from the co-initiators may increase rapidly at the initial stage of the polymerization reaction, thereby causing termination reactions between radicals to predominate over the polymerization rate, which may hinder the polymerization reaction. In this regard, when visible light of 40 to $80mW/cm^2$ is irradiated during photocuring according to the present disclosure, the radical concentration and polymerization rate are optimized, and an excellent conversion rate in the polymerization reaction can be exhibited.

In one embodiment of the present disclosure, the polymerization rate can be further improved by additionally irradiating visible light onto the prepared resin. Specifically, a film resin with an improved polymerization rate can be prepared by additionally irradiating visible light after applying the bulk-form resin prepared by the above light irradiation onto a substrate, or by additionally irradiating visible light onto the film-form resin prepared by the above light irradiation.

When a film resin is prepared using the bulk-form resin, the bulk resin prepared before the additional visible light irradiation is applied onto a substrate. For example, a uniform film can be formed by applying the bulk resin onto a release liner and then adjusting the thickness using a micro applicator.

At this time, the thickness of the resin before the additional light irradiation may be 1 $\mu$m to 8mm. Although the thickness may be adjusted as needed, if the thickness is too thin, it is difficult to form a uniform coating, and if the thickness is too thick, the polymerization rate may decrease. Therefore, it is preferable that the thickness is 10 to 2mm, and more preferably 40 to 80$\mu$m in terms of coating ease and polymerization rate.

In the step of additional visible light irradiation, the light irradiation may be performed for 10 to 600 seconds, preferably for 40 to 120 seconds, and for example, for 40 to 80 seconds. By the additional light irradiation, a film resin with a very excellent polymerization rate can be prepared.

Since the photocurable composition of the present disclosure enables polymerization by visible light, it can be cured even in materials that do not transmit UV (e.g., polyimide), and because it uses a very small amount of photocatalyst

compared to conventional technologies, deep curing is possible, and despite absorbing visible light, a resin with very high transmittance can be prepared.

Accordingly, the photocurable composition of the present disclosure may be used in various fields where photocured resins are applied, such as sealing layers, adhesive layers, protective layers, coating layers, printing layers, solder masks, and the like, and is particularly useful in fields requiring transparency (e.g., optical clear adhesive (OCA), transparent protective layers, etc.).

## Examples

The present disclosure will be described in further detail with reference to the following Examples. However, these Examples are provided only for illustrative purposes to describe certain experimental methods and configurations, and the scope of the present disclosure is not limited thereto.

### Preparation Example 1: Preparation of Photocurable Composition and Preparation of Photocured Resin Using the Same

A photocurable composition comprising a photocatalyst composition comprising a photocatalyst and co-initiators and a polymerizable monomer was prepared, and a resin was prepared by curing the composition.

First, the photocatalyst (4DP-IPN), the anionic co-initiator (co-initiator I, Borate V), and the cationic co-initiator (co-initiator II, HNu254) were mixed and stirred at room temperature until a homogeneous composition was obtained. For bulk polymerization, the monomer (2-EHA) was used as the solvent. To improve reproducibility, stock solutions of the photocatalyst and co-initiators were prepared and diluted, followed by stirring to obtain a uniformly mixed solution. The molar ratio of the monomer, photocatalyst, co-initiator I, and co-initiator II was set to 100:0.001:0.01:0.1, such that the equivalents of the photocatalyst, co-initiator I, and co-initiator II were 10 ppm, 100 ppm, and 1,000 ppm, respectively.

The prepared photocurable composition was degassed with nitrogen gas for 30 minutes to remove oxygen. Then, the composition was cured in a stirred state by irradiating light at an intensity of 100 $mW/cm^2$ for 10 seconds using a blue LED curing device (wavelength: 455 nm), thereby preparing a photocured resin.

In the following Experimental Examples, the raw materials of the composition are indicated by the common names listed in Table 1 below.

[Table 1]

| Cas No. | Common Name | Chemical Name |
|---|---|---|
| 103-11-7 | 2-EHA | 2-Ethylhexyl acrylate |
| 182442-81-5 | Borate V | [2-(Butanoyloxy)ethyl]trimethylazanium butyltriphenylborate |
| 120307-06-4 | P3B | Tetrabutylammonium butyltriphenylborate |
| 219125-19-6 | N3B | Tetrabutylammonium butyltrinaphthylborate |
| 121239-75-6 | HNu254 | [4-(Octyloxy)phenyl](phenyl)iodonium hexafluoroantimonate |
| 58109-40-3 | Piod | Diphenyliodonium hexafluorophosphate |
| 60565-88-0 | Tiod | Bis(4-methylphenyl)iodonium hexafluorophosphate |
| 1846598-27-3 | 4DP-IPN | 2,4,5,6-Tetrakis(diphenylamino)isophthalonitrile |
| 1416881-52-1 | 4Cz-IPN | 2,4,5,6-Tetrakis(carbazol-9-yl)isophthalonitrile |
| 1630263-99-8 | 4tCz-IPN | 2,4,5,6-Tetrakis(3,6-di-tert-butylcarbazol-9-yl)isophthalonitrile |
| 2260543-73-3 | 3DP-F-IPN | 2,4,6-Tris(diphenylamino)-5-fluoroisophthalonitrile |
| N/A | 3Cz-F-IPN | 2,4,6-Tris(carbazol-9-yl)-5-fluoroisophthalonitrile |
| N/A | 4DMDP-IPN | 2,4,5,6-Tetrakis(bis(4-methoxyphenyl)amino)isophthalonitrile |
| N/A | 4DCDP-IPN | 2,4,5,6-Tetrakis(bis(4-cyanophenyl)amino)isophthalonitrile |
| N/A | 4DP-BN | 2,3,5,6-Tetrakis(diphenylamino)benzonitrile |

### Experimental Method: Measurement of Conversion Rate of Photocured Resin

In order to measure the conversion rate before and after curing of the photocurable composition, the degree of

curing was analyzed using Fourier Transform Infrared (FT-IR) spectroscopy. From the analysis results, the conversion rate was calculated according to the following equation by comparing the degree of C=C bonds to C=O bonds in the composition and the cured resin.

$$\text{Conversion rate(\%)} = \frac{\frac{A_{0(C=C)}}{A_{0(C=O)}} - \frac{A_{t(C=C)}}{A_{t(C=O)}}}{\frac{A_{0(C=C)}}{A_{0(C=O)}}} \times 100$$

In the above equation, $A_{0(C=C)}$, $A_{0(C=O)}$, $A_{t(C=C)}$, and $A_{t(C=O)}$ respectively refer to the average peak areas of C=C (830-790 $cm^{-1}$) at time 0 seconds, C=O (1760-1660 $cm^{-1}$) at time 0 seconds, C=C at time t seconds, and C=O at time t seconds.

**Experimental Example 1: Comparative Experiment on Conversion Rate Depending on Type of Co-Initiator**

Using the method of Preparation Example 1, resins were prepared by changing the type of co-initiator as shown in Table 2, and the conversion rate before and after curing was measured to compare the results.

**[Table 2]**

| Classification | Monomer | Photocatalyst (ppm) | Co-initiator I (ppm) | Co-initiator II (ppm) | Time (s) | Conversion Rate (%) |
|---|---|---|---|---|---|---|
| 1-1 | 2-EHA | 4DP-IPN (10) | Borate V (100) | HNu254 (1000) | 10 | 46.8 |
| 1-2 | 2-EHA | 4DP-IPN (10) | - | HNu254 (1000) | 10 | 2.7 |
| 1-3 | 2-EHA | 4DP-IPN (10) | Borate V (100) | - | 10 | 2.7 |

As a result of the experiment, when a photoinitiating system was formed by using 10 ppm of photocatalyst and visible light was irradiated for 10 seconds, the conversion rate remained at a low level of 2.7% when only one type of co-initiator was used, indicating that almost no polymerization occurred. In contrast, when both co-initiators I and II were used together, the conversion rate significantly increased to 46.8%.

Through this, it was confirmed that when co-initiators I and II are used in combination, the curing conversion rate is remarkably improved due to a synergistic effect.

**Example 2: Comparative Experiment on Conversion Rate According to Type of Photocatalyst**

Using the method of Preparation Example 1, resins were prepared by varying the type of photocatalyst as shown in Table 3, and the conversion rate before and after curing was measured and compared.

[Table 3]

| Classification | Monomer | Photocatalyst (ppm) | Co-initiator I (ppm) | Co-initiator II (ppm) | Time (s) | Conversion Rate (%) |
|---|---|---|---|---|---|---|
| 2-1 | 2-EHA | 4DP-IPN (10) | Borate V (100) | HNu254 (1000) | 10 | 46.8 |
| 2-2 | 2-EHA | 4Cz-IPN (10) | Borate V (100) | HNu254 (1000) | 10 | 35.9 |
| 2-3 | 2-EHA | 4tCz-IPN (10) | Borate V (100) | HNu254 (1000) | 10 | 36.2 |
| 2-4 | 2-EHA | 3DP-F-IPN (10) | Borate V (100) | HNu254 (1000) | 10 | 49.2 |
| 2-5 | 2-EHA | 3Cz-F-IPN (10) | Borate V (100) | HNu254 (1000) | 10 | 23.7 |
| 2-6 | 2-EHA | 4DMDP-IPN (10) | Borate V (100) | HNu254 (1000) | 10 | 30.5 |
| 2-7 | 2-EHA | 4DCDP-IPN (10) | Borate V (100) | HNu254 (1000) | 10 | 40.6 |
| 2-8 | 2-EHA | 4DP-BN (10) | Borate V (100) | HNu254 (1000) | 10 | 29.8 |

According to the experimental results, when various types of photocatalysts were used, the conversion rate

ranged from a minimum of 23.7% to a maximum of 46.8%. Among them, when 4DP-IPN, 3DP-F-IPN, and 4DCDP-IPN were used, the conversion rate exceeded 40%, indicating high efficiency.

Accordingly, the present disclosure was confirmed to be effective with various photocatalysts, however, it was also found that the conversion rate enhancement effect may vary depending on the type of photocatalyst.

**Experimental Example 3: Analysis of Conversion Rate Variation According to Visible Light Irradiation Time**

Using the method of Preparation Example 1, the irradiation time was varied as shown in Table 4, and the conversion rate before and after curing was measured to compare the results.

[Table 4]

| Classification | Monomer | Photocatalyst (ppm) | Co-initiator I (ppm) | Co-initiator II (ppm) | Time (s) | Conversion Rate (%) |
|---|---|---|---|---|---|---|
| 3-1 | 2-EHA | 4DP-IPN (10) | Borate V (100) | HNu254 (1000) | 2 | 34.2 |
| 3-2 | 2-EHA | 4DP-IPN (10) | Borate V (100) | HNu254 (1000) | 4 | 46.4 |
| 3-3 | 2-EHA | 4DP-IPN (10) | Borate V (100) | HNu254 (1000) | 6 | 42.8 |
| 3-4 | 2-EHA | 4DP-IPN (10) | Borate V (100) | HNu254 (1000) | 8 | 44.8 |
| 3-5 | 2-EHA | 4DP-IPN (10) | Borate V (100) | HNu254 (1000) | 10 | 45.7 |
| 3-6 | 2-EHA | 4DP-IPN (10) | Borate V (100) | HNu254 (1000) | 20 | 43.7 |

Experimental results showed that when using the photocatalyst composition of the present disclosure, a significant amount of polymerization occurred even with a very short light irradiation time of 2 seconds. In particular, it was confirmed that when the irradiation time was 4 seconds or longer, the conversion rate of the polymerization reached a saturation point within the experimental error range (±5%).

**Experimental Example 4: Analysis of Conversion Rate Variation According to Visible Light Irradiation Time (2)**

Using the method of Preparation Example 1, the equivalents of the photocatalyst was changed to 1 ppm, and the irradiation time was varied as shown in Table 5. After curing, the conversion rate was measured and the results were compared.

[Table 5]

| Classification | Monomer | Photocatalyst (ppm) | Co-initiator I (ppm) | Co-initiator II (ppm) | Time (s) | Conversion Rate (%) |
|---|---|---|---|---|---|---|
| 4-1 | 2-EHA | 4DP-IPN (1) | Borate V (100) | HNu254 (1000) | 2 | 8.2 |
| 4-2 | 2-EHA | 4DP-IPN (1) | Borate V (100) | HNu254 (1000) | 4 | 16.8 |
| 4-3 | 2-EHA | 4DP-IPN (1) | Borate V (100) | HNu254 (1000) | 6 | 26.4 |
| 4-4 | 2-EHA | 4DP-IPN (1) | Borate V (100) | HNu254 (1000) | 8 | 31.5 |
| 4-5 | 2-EHA | 4DP-IPN (1) | Borate V (100) | HNu254 (1000) | 10 | 41.0 |
| 4-6 | 2-EHA | 4DP-IPN (1) | Borate V (100) | HNu254 (1000) | 15 | 54.4 |
| 4-7 | 2-EHA | 4DP-IPN (1) | Borate V (100) | HNu254 (1000) | 20 | 58.6 |
| 4-8 | 2-EHA | 4DP-IPN (1) | Borate V (100) | HNu254 (1000) | 30 | 61.3 |
| 4-9 | 2-EHA | 4DP-IPN (1) | Borate V (100) | HNu254 (1000) | 40 | 64.7 |
| 4-10 | 2-EHA | 4DP-IPN (1) | Borate V (100) | HNu254 (1000) | 50 | 68.5 |
| 4-11 | 2-EHA | 4DP-IPN (1) | Borate V (100) | HNu254 (1000) | 60 | 67.6 |
| 4-12 | 2-EHA | 4DP-IPN (1) | Borate V (100) | HNu254 (1000) | 70 | 69.7 |
| 4-13 | 2-EHA | 4DP-IPN (1) | Borate V (100) | HNu254 (1000) | 90 | 81.7 |
| 4-14 | 2-EHA | 4DP-IPN (1) | Borate V (100) | HNu254 (1000) | 120 | 87.7 |

According to the experimental results, even when the photocatalyst was used at a very small amount of 1 ppm, a conversion rate of approximately 41% was achieved with 10 seconds of light irradiation. Moreover, when the light irradiation time was increased, the conversion rate reached as high as 87.7%, confirming excellent performance.

Thus, it was verified that the present disclosure enables a significant improvement in the polymerization rate even with a very small amount of photocatalyst.

**Experimental Example 5: Comparative Analysis of Conversion Rate According to Visible Light Intensity**

Using the same method as in Preparation Example 1, the resin was cured under reduced visible light intensities of 50% and 25%, as shown in Table 6, and the conversion rate of the resulting resin was measured and compared.

[Table 6]

| Classification | Monomer | Photocatalyst (ppm) | Co-initiator I (ppm) | Co-initiator II (ppm) | Intensity (%) | Time (s) | Conversion Rate (%) |
|---|---|---|---|---|---|---|---|
| 5-1 | 2-EHA | 4DP-IPN (10) | Borate V (100) | HNu254 (1000) | 100 | 10 | 45.7 |
| 5-2 | 2-EHA | 4DP-IPN (10) | Borate V (100) | HNu254 (1000) | 50 | 10 | 53.3 |
| 5-3 | 2-EHA | 4DP-IPN (10) | Borate V (100) | HNu254 (1000) | 25 | 10 | 36.8 |

As a result of the experiment, it was confirmed that even when the irradiation intensity was reduced to one-quarter, a relatively high conversion rate of 36.8% was maintained. This experimental result demonstrates that, in the present disclosure, the photoinitiating system formed by combining the photocatalyst and the co-initiators is capable of sufficiently inducing polymerization even under low light intensity conditions.

In addition, according to the experimental results, when the irradiation intensity was reduced to 50%, the conversion rate increased from 45.7% to 53.3%. This phenomenon is interpreted as being due to a rapid increase in the concentration of radicals generated from the co-initiators in the early stage of the polymerization reaction under high irradiation intensity, which causes the termination reaction between radicals to become predominant over the propagation rate of polymerization.

**Example 6: Analysis of Conversion Rate Depending on Visible Light Intensity and Irradiation Time**

Using the method of Preparation Example 1, the cured resin was prepared by varying the visible light irradiation intensity and irradiation time, and the conversion rate of the resin was measured. The experimental results are shown in FIG. 1 and Table 7 below.

[Table 7]

| Classification | Monomer | Photocatalyst (ppm) | Co-initiator I (ppm) | Co-initiator II (ppm) | Intensity (%) | Time (s) | Conversion Rate (%) |
|---|---|---|---|---|---|---|---|
| 6-1 | 2-EHA | 4DP-IPN (10) | Borate V (100) | HNu254 (1000) | 100 | 2 | 34.2 |
| 6-2 | 2-EHA | 4DP-IPN (10) | Borate V (100) | HNu254 (1000) | 100 | 4 | 46.4 |
| 6-3 | 2-EHA | 4DP-IPN (10) | Borate V (100) | HNu254 (1000) | 100 | 6 | 42.8 |
| 6-4 | 2-EHA | 4DP-IPN (10) | Borate V (100) | HNu254 (1000) | 100 | 8 | 44.8 |
| 6-5 | 2-EHA | 4DP-IPN (10) | Borate V (100) | HNu254 (1000) | 100 | 10 | 45.7 |
| 6-6 | 2-EHA | 4DP-IPN (10) | Borate V (100) | HNu254 (1000) | 100 | 15 | 38.0 |

(continued)

| Classification | Monomer | Photocatalyst (ppm) | Co-initiator I (ppm) | Co-initiator II (ppm) | Intensity (%) | Time (s) | Conversion Rate (%) |
|---|---|---|---|---|---|---|---|
| 6-7 | 2-EHA | 4DP-IPN (10) | Borate V (100) | HNu254 (1000) | 100 | 20 | 43.7 |
| 6-8 | 2-EHA | 4DP-IPN (10) | Borate V (100) | HNu254 (1000) | 50 | 5 | 28.9 |
| 6-9 | 2-EHA | 4DP-IPN (10) | Borate V (100) | HNu254 (1000) | 50 | 10 | 53.3 |
| 6-10 | 2-EHA | 4DP-IPN (10) | Borate V (100) | HNu254 (1000) | 50 | 15 | 43.1 |
| 6-11 | 2-EHA | 4DP-IPN (10) | Borate V (100) | HNu254 (1000) | 50 | 20 | 54.8 |
| 6-12 | 2-EHA | 4DP-IPN (10) | Borate V (100) | HNu254 (1000) | 25 | 5 | 21.4 |
| 6-13 | 2-EHA | 4DP-IPN (10) | Borate V (100) | HNu254 (1000) | 25 | 10 | 36.8 |
| 6-14 | 2-EHA | 4DP-IPN (10) | Borate V (100) | HNu254 (1000) | 25 | 15 | 39.0 |
| 6-15 | 2-EHA | 4DP-IPN (10) | Borate V (100) | HNu254 (1000) | 25 | 20 | 43.7 |

Based on the experimental results, it was confirmed that even when the light intensity was reduced to 50% or 25%, a relatively high conversion rate could be achieved within a short irradiation time. Furthermore, when the irradiation time was extended to 20 seconds, all samples exposed to various light intensities exhibited a conversion rate exceeding 40%.

Therefore, it was demonstrated that, according to the present disclosure, the combination of a photocatalyst and co-initiators allows for effective polymerization in a short time even under low-intensity visible light.

**Experimental Example 7: Analysis of Conversion Rate Depending on Visible Light Intensity and Irradiation Time (2)**

Using the method of Preparation Example 1, the equivalents of photocatalyst was changed to 1 ppm, and the visible light irradiation intensity and irradiation time were varied. After curing, the conversion rate of the resin was measured. The experimental results are shown in FIG. 2 and Table 8 below.

[Table 8]

| Classification | Monomer | Photocatalyst (ppm) | Co-initiator I (ppm) | Co-initiator II (ppm) | Intensity (%) | Time (s) | Conversion Rate (%) |
|---|---|---|---|---|---|---|---|
| 7-1 | 2-EHA | 4DP-IPN (1) | Borate V (100) | HNu254 (1000) | 100 | 2 | 8.2 |
| 7-2 | 2-EHA | 4DP-IPN (1) | Borate V (100) | HNu254 (1000) | 100 | 4 | 16.8 |
| 7-3 | 2-EHA | 4DP-IPN (1) | Borate V (100) | HNu254 (1000) | 100 | 6 | 26.4 |
| 7-4 | 2-EHA | 4DP-IPN (1) | Borate V (100) | HNu254 (1000) | 100 | 8 | 31.5 |
| 7-5 | 2-EHA | 4DP-IPN (1) | Borate V (100) | HNu254 (1000) | 100 | 10 | 41.0 |

(continued)

| Classification | Monomer | Photocatalyst (ppm) | Co-initiator I (ppm) | Co-initiator II (ppm) | Intensity (%) | Time (s) | Conversion Rate (%) |
|---|---|---|---|---|---|---|---|
| 7-6 | 2-EHA | 4DP-IPN (1) | Borate V (100) | HNu254 (1000) | 100 | 15 | 54.4 |
| 7-7 | 2-EHA | 4DP-IPN (1) | Borate V (100) | HNu254 (1000) | 100 | 20 | 58.6 |
| 7-8 | 2-EHA | 4DP-IPN (1) | Borate V (100) | HNu254 (1000) | 100 | 30 | 61.3 |
| 7-9 | 2-EHA | 4DP-IPN (1) | Borate V (100) | HNu254 (1000) | 50 | 5 | 12.2 |
| 7-10 | 2-EHA | 4DP-IPN (1) | Borate V (100) | HNu254 (1000) | 50 | 10 | 19.2 |
| 7-11 | 2-EHA | 4DP-IPN (1) | Borate V (100) | HNu254 (1000) | 50 | 15 | 32.5 |
| 7-12 | 2-EHA | 4DP-IPN (1) | Borate V (100) | HNu254 (1000) | 50 | 20 | 39.4 |
| 7-13 | 2-EHA | 4DP-IPN (1) | Borate V (100) | HNu254 (1000) | 25 | 5 | 6.0 |
| 7-14 | 2-EHA | 4DP-IPN (1) | Borate V (100) | HNu254 (1000) | 25 | 10 | 15.0 |
| 7-15 | 2-EHA | 4DP-IPN (1) | Borate V (100) | HNu254 (1000) | 25 | 15 | 23.1 |
| 7-16 | 2-EHA | 4DP-IPN (1) | Borate V (100) | HNu254 (1000) | 25 | 20 | 29.5 |

According to the experimental results, even when the amount of photocatalyst was reduced to 1 ppm, a high conversion rate of at least 41% was achieved by adjusting the irradiation time to 10 seconds or more. Furthermore, even when the visible light intensity was significantly lowered to 50% or 25%, conversion rates of approximately 40% and 30%, respectively, were obtained when the irradiation time was set to 20 seconds. These results indicate that the present disclosure enables improved conversion efficiency under various light intensities, even with a very small amount of photocatalyst.

**Experimental Example 8: Comparative Experiment of Conversion Rates Depending on Photocatalyst Equivalents**

Using the method described in Preparation Example 1, the equivalents of the photocatalyst were adjusted to 0.5, 1, 5, and 10 ppm, as shown in Table 9, and the compositions were cured by irradiating with visible light for 5 seconds. The conversion rates were then measured and compared.

[Table 9]

| Classification | Monomer | Photocatalyst (ppm) | Co-initiator I (ppm) | Co-initiator II (ppm) | Time (s) | Conversion Rate (%) |
|---|---|---|---|---|---|---|
| 8-1 | 2-EHA | 4DP-IPN (10) | Borate V (100) | HNu254 (1000) | 5 | 46.8 |
| 8-2 | 2-EHA | 4DP-IPN (5) | Borate V (100) | HNu254 (1000) | 5 | 41.2 |
| 8-3 | 2-EHA | 4DP-IPN (1) | Borate V (100) | HNu254 (1000) | 5 | 24.7 |
| 8-4 | 2-EHA | 4DP-IPN (0.5) | Borate V (100) | HNu254 (1000) | 5 | 13.5 |

The experimental results showed that when the amount of photocatalyst was 0.5 ppm, the conversion rate was approximately 13.5%, whereas at 1 ppm, a conversion rate of 24.7% was achieved even with a short light exposure time of

5 seconds. When the amount was equal to or greater than 5 ppm, excellent conversion rates of 40% or more were observed. Accordingly, it was confirmed that the amount of photocatalyst is preferably 1 ppm or more, and particularly, when it is equal to or greater than 5 ppm, excellent effects can be achieved even with a short duration of light exposure.

**Experimental Example 9: Comparative Experiment on Conversion Rates Depending on the Type of Co-initiator I**

Using the method of Preparation Example 1, a photoinitiating system was formed by changing the type of co-initiator I as shown in Table 10. After curing by irradiating visible light for 30 seconds, the conversion rates were measured and compared.

[Table 10]

| Classification | Monomer | Photocatalyst (ppm) | Co-initiator I (ppm) | Co-initiator II (ppm) | Time (s) | Conversion Rate (%) |
|---|---|---|---|---|---|---|
| 9-1 | 2-EHA | 4DP-IPN (10) | Borate V (100) | HNu254 (1000) | 30 | 61.3 |
| 9-2 | 2-EHA | 4DP-IPN (10) | P3B (100) | HNu254 (1000) | 30 | 65.6 |
| 9-3 | 2-EHA | 4DP-IPN (10) | N3B (100) | HNu254 (1000) | 30 | 50.0 |

Experimental results showed that when the type of co-initiator I was changed, a conversion rate of at least 50% was observed. In particular, when Borate V ([2-(butanoyloxy)ethyl]trimethylazanium butyltriphenylborate) and P3B (tetrabutylammonium butyltriphenylborate) were used, higher conversion rates were achieved compared to the case using N3B (tetrabutylammonium butyltrinaphthylborate).

Accordingly, it was confirmed that the effect of the present disclosure appears with various types of co-initiator I, and that the effect can be further enhanced especially when phenylborate-based co-initiators are used.

**Experimental Example 10: Comparison of Conversion Rates According to the Equivalents of Co-initiator I**

Using the method of Preparation Example 1, a photoinitiating system was formed by using 1ppm of the photocatalyst and varying the equivalents of co-initiator I as shown in Table 11. After curing, the conversion rates were measured and compared.

[Table 11]

| Classification | Monomer | Photocatalyst (ppm) | Co-initiator I (ppm) | Co-initiator II (ppm) | Time (s) | Conversion Rate (%) |
|---|---|---|---|---|---|---|
| 10-1 | 2-EHA | 4DP-IPN (1) | Borate V (100) | HNu254 (1000) | 10 | 41.0 |
| 10-2 | 2-EHA | 4DP-IPN (1) | Borate V (200) | HNu254 (1000) | 10 | 39.9 |
| 10-3 | 2-EHA | 4DP-IPN (1) | Borate V (300) | HNu254 (1000) | 10 | 53.2 |

According to the experimental results, even when 100 ppm of co-initiator I was used, a high conversion rate was achieved. However, when the amount of co-initiator I was increased from 100 ppm to 300 ppm, the conversion rate significantly increased from 41.0% to 53.2%. These results indicate that an improvement in the conversion rate can be achieved even with a small amount of co-initiator, and that this effect can be further enhanced by increasing the amount of co-initiator I.

**Experimental Example 11: Analysis of Conversion Rate Variation According to Visible Light Intensity and Irradiation Time (3)**

The method of Preparation Example 1 was used, except that the amount of co-initiator I was changed to 200 ppm, and the resin was cured by varying the visible light intensity and irradiation time. The experimental results are shown in Figure 3 and Table 12 below.

[Table 12]

| Classification | Monomer | Photocatalyst (ppm) | Co-initiator I (ppm) | Co-initiator II (ppm) | Intensity (%) | Time (s) | Conversion Rate (%) |
|---|---|---|---|---|---|---|---|
| 11-1 | 2-EHA | 4DP-IPN (1) | Borate V (200) | HNu254 (1000) | 100 | 5 | 22.3 |
| 11-2 | 2-EHA | 4DP-IPN (1) | Borate V (200) | HNu254 (1000) | 100 | 10 | 39.9 |
| 11-3 | 2-EHA | 4DP-IPN (1) | Borate V (200) | HNu254 (1000) | 100 | 20 | 73.8 |
| 11-4 | 2-EHA | 4DP-IPN (1) | Borate V (200) | HNu254 (1000) | 100 | 30 | 72.5 |
| 11-5 | 2-EHA | 4DP-IPN (1) | Borate V (200) | HNu254 (1000) | 50 | 5 | 21.0 |
| 11-6 | 2-EHA | 4DP-IPN (1) | Borate V (200) | HNu254 (1000) | 50 | 10 | 33.0 |
| 11-7 | 2-EHA | 4DP-IPN (1) | Borate V (200) | HNu254 (1000) | 50 | 20 | 69.3 |
| 11-8 | 2-EHA | 4DP-IPN (1) | Borate V (200) | HNu254 (1000) | 50 | 30 | 78.1 |
| 11-9 | 2-EHA | 4DP-IPN (1) | Borate V (200) | HNu254 (1000) | 25 | 5 | 8.4 |
| 11-10 | 2-EHA | 4DP-IPN (1) | Borate V (200) | HNu254 (1000) | 25 | 10 | 26.0 |
| 11-11 | 2-EHA | 4DP-IPN (1) | Borate V (200) | HNu254 (1000) | 25 | 20 | 46.6 |
| 11-12 | 2-EHA | 4DP-IPN (1) | Borate V (200) | HNu254 (1000) | 25 | 30 | 73.3 |

According to the experimental results, even when the light irradiation intensity was significantly reduced to 50% or 25%, a high conversion rate could still be achieved by adjusting the irradiation time. Specifically, a maximum conversion rate of 78.1% and 73.3% was achieved at an irradiation time of 30 seconds, respectively. These results demonstrate that, according to the present disclosure, excellent conversion rates can be achieved under various light intensities even with a very small amount of photocatalyst.

**Experimental Example 12: Analysis of Conversion Rate Variation According to Visible Light Intensity and Irradiation Time (4)**

Using the method of Preparation Example 1, a resin was cured by varying the visible light irradiation intensity and irradiation time, while changing the amount of co-initiator I to 300 ppm. The conversion rate of the resin after curing was measured, and the experimental results are shown in FIG. 4 and Table 13 below.

[Table 13]

| Classification | Monomer | Photocatalyst (ppm) | Co-initiator I (ppm) | Co-initiator II (ppm) | Intensity (%) | Time (s) | Conversion Rate (%) |
|---|---|---|---|---|---|---|---|
| 12-1 | 2-EHA | 4DP-IPN (1) | Borate V (300) | HNu254 (1000) | 100 | 5 | 32.7 |
| 12-2 | 2-EHA | 4DP-IPN (1) | Borate V (300) | HNu254 (1000) | 100 | 10 | 53.2 |
| 12-3 | 2-EHA | 4DP-IPN (1) | Borate V (300) | HNu254 (1000) | 100 | 20 | 78.1 |

(continued)

| Classification | Monomer | Photocatalyst (ppm) | Co-initiator I (ppm) | Co-initiator II (ppm) | Intensity (%) | Time (s) | Conversion Rate (%) |
|---|---|---|---|---|---|---|---|
| 12-4 | 2-EHA | 4DP-IPN (1) | Borate V (300) | HNu254 (1000) | 100 | 30 | 67.1 |
| 12-5 | 2-EHA | 4DP-IPN (1) | Borate V (300) | HNu254 (1000) | 50 | 5 | 28.7 |
| 12-6 | 2-EHA | 4DP-IPN (1) | Borate V (300) | HNu254 (1000) | 50 | 10 | 37.3 |
| 12-7 | 2-EHA | 4DP-IPN (1) | Borate V (300) | HNu254 (1000) | 50 | 20 | 41.3 |
| 12-8 | 2-EHA | 4DP-IPN (1) | Borate V (300) | HNu254 (1000) | 50 | 30 | 74.3 |
| 12-9 | 2-EHA | 4DP-IPN (1) | Borate V (300) | HNu254 (1000) | 25 | 5 | 27.7 |
| 12-10 | 2-EHA | 4DP-IPN (1) | Borate V (300) | HNu254 (1000) | 25 | 10 | 34.7 |
| 12-11 | 2-EHA | 4DP-IPN (1) | Borate V (300) | HNu254 (1000) | 25 | 20 | 38.4 |
| 12-12 | 2-EHA | 4DP-IPN (1) | Borate V (300) | HNu254 (1000) | 25 | 30 | 80.6 |

According to the experimental results, when 300 ppm of co-initiator I was used, high conversion rates were achieved by adjusting the irradiation time even when the light intensity was significantly reduced to 50% or 25%. Specifically, a maximum conversion rate of 74.3% and 80.6% was achieved at 30 seconds of irradiation, respectively. These results demonstrate that, by forming a photoinitiating system according to the present disclosure, excellent conversion rates can be achieved under various light intensities even with a very small amount of photocatalyst.

**Experimental Example 13: Comparative Experiment of Conversion Rates According to the Type of Co-initiator II**

The method of Preparation Example 1 was used, except that the type of co-initiator II was changed as shown in Table 14 to form a photoinitiating system, and the conversion rates after curing were measured and compared.

[Table 14]

| Classification | Monomer | Photocatalyst (ppm) | Co-initiator I (ppm) | Co-initiator II (ppm) | Time (s) | Conversion Rate (%) |
|---|---|---|---|---|---|---|
| 13-1 | 2-EHA | 4DP-IPN (10) | Borate V (100) | HNu254 (1000) | 10 | 46.8 |
| 13-2 | 2-EHA | 4DP-IPN (10) | Borate V (100) | Piod (1000) | 10 | 12.3 |
| 13-3 | 2-EHA | 4DP-IPN (10) | Borate V (100) | Tiod (1000) | 10 | 32.3 |

According to the experimental results, even when the type of co-initiator II was changed, higher conversion rates were observed compared to the case where only co-initiator I was used (see samples 1-3). Among them, Tiod (bis(4-methylphenyl)iodonium hexafluorophosphate) and HNu254 ([4-(octyloxy)phenyl](phenyl)iodonium hexafluoroantimonate) were found to be suitable, with HNu254 being particularly desirable in terms of improving the conversion rate.

**Experimental Example 14: Comparative Experiment of Conversion Rates According to the Equivalents of Co-initiator 11**

The method of Preparation Example 1 was used, except that the equivalents of photocatalyst and co-initiator II were changed as shown in Table 15 to form a photoinitiating system, and the resin was cured by irradiating visible light for 5

seconds. The conversion rates were then measured and compared.

[Table 15]

| Classification | Monomer | Photocatalyst (ppm) | Co-initiator I (ppm) | Co-initiator II (ppm) | Time (s) | Conversion Rate (%) |
|---|---|---|---|---|---|---|
| 14-1 | 2-EHA | 4DP-IPN (0.5) | Borate V (100) | HNu254 (1000) | 5 | 13.5 |
| 14-2 | 2-EHA | 4DP-IPN (0.5) | Borate V (100) | HNu254 (500) | 5 | 15.6 |
| 14-3 | 2-EHA | 4DP-IPN (0.5) | Borate V (100) | HNu254 (200) | 5 | 15.4 |
| 14-4 | 2-EHA | 4DP-IPN (0.5) | Borate V (100) | HNu254 (100) | 5 | 15.5 |
| 14-5 | 2-EHA | 4DP-IPN (0.5) | Borate V (100) | HNu254 (50) | 5 | 13.7 |
| 14-6 | 2-EHA | 4DP-IPN (0.5) | Borate V (100) | HNu254 (10) | 5 | 14.0 |
| 14-7 | 2-EHA | 4DP-IPN (0.5) | Borate V (100) | HNu254 (5) | 5 | 5.7 |
| 14-8 | 2-EHA | 4DP-IPN (0.5) | Borate V (100) | HNu254 (2) | 5 | 1.7 |
| 14-9 | 2-EHA | 4DP-IPN (0.5) | Borate V (100) | HNu254 (1) | 5 | 1.3 |

According to the experimental results, when the photocatalyst was used in a trace amount of 0.5 ppm, the conversion rates were low, ranging from 1.3% to 5.7% under conditions where the co-initiator II was 1, 2, or 5 ppm. In contrast, when the amount of co-initiator II was between 10 and 1,000 ppm, the conversion rates significantly increased to a range of 13.5% to 15.6%. Accordingly, it was found that when the amount of co-initiator II was 20 mol or more per 1 mol of the photocatalyst, the conversion rate was excellent, and when the amount was 200 mol or more, the result was even more preferable.

**Experimental Example 15: Comparative Analysis of Conversion Rates Depending on Degassing**

The method of Preparation Example 1 was used, except that the nitrogen degassing step was omitted. Curing was performed in ambient air, and the resulting conversion rates were measured. The difference in conversion rates depending on whether degassing was performed is shown in Table 16 below.

[Table 16]

| Classification | Monomer | Photocatalyst | Co-initiator | Co-initiator | Time (s) | Degassing | Conversion |
|---|---|---|---|---|---|---|---|
| | | (ppm) | I (ppm) | II (ppm) | | | Rate (%) |
| 15-1 | 2-EHA | 4DP-IPN (10) | Borate V (100) | HNu254 (1000) | 10 | O | 46.8 |
| 15-2 | 2-EHA | 4DP-IPN (10) | Borate V (100) | HNu254 (1000) | 10 | X | 10.4 |

According to the experimental results, it was confirmed that the conversion rate significantly varies depending on whether degassing is performed prior to curing. Therefore, in order to achieve a high conversion rate, it was found desirable to perform curing under a nitrogen ($N_2$) atmosphere by removing oxygen through degassing before curing.

**Preparation Example 2: Preparation of a Photocured Resin Film**

A photocured resin film was prepared by performing second curing on a photocured resin that was prepared using the photocatalyst composition of the present disclosure.

First, using the method of Preparation Example 1, a photocured resin was prepared by adjusting the amount of photocatalyst to 1 ppm and irradiating visible light for 5 seconds. For second curing, the photocured resin was applied between two silicone release films, and the thickness of the resin was uniformly adjusted to 50 $\mu$m using a micro applicator. The resin was then cured for 100 seconds in a blue LED curing apparatus.

**Experimental Example 16: Analysis of Conversion Rate of the Secondary-Cured Resin Film**

For the resin film obtained in Preparation Example 2, the conversion rate of the resin after the first curing (bulk polymerization) for 5 seconds and the conversion rate of the film resin after the second curing (film curing) for 100 seconds

were measured. The results are shown in Table 17.

[Table 17]

| Classification | Monomer | Photocatalyst (ppm) | Co-initiator I (ppm) | Co-initiator II (ppm) | Conversion Rate (%) | |
|---|---|---|---|---|---|---|
| | | | | | bulk polymerizat ion | film curing |
| 16-1 | 2-EHA | 4DP-IPN (1) | Borate V (100) | HNu254 (1000) | 17.0 | 76.1 |

According to the experimental results, even when only 1 ppm of photocatalyst was used, the conversion rate was very high in the film state after performing a second curing process on the bulk-state resin prepared through the first curing. Accordingly, when the present disclosure is applied to the preparation of a resin film, it was found that a film with excellent curing polymerization rate can be prepared even with a small amount of photocatalyst.

**Experimental Example 17: Analysis of Conversion Rate of Films According to the Equivalents of Co-initiator II**

Using the method of Preparation Example 1, a photocurable composition was prepared by setting the equivalents of the photocatalyst to 1 ppm, the equivalents of co-initiator I to 300 ppm, and the equivalents of co-initiator II to 1,000 ppm, 500 ppm, 200 ppm, and 100 ppm, respectively. A photocured resin was prepared by irradiating visible light for 5 seconds. Then, using the method of Preparation Example 2, the resin was cured for 100 seconds to prepare a resin film, and the conversion rates after the first curing (bulk polymerization) and the second curing (film curing) were measured. The results are shown in Table 18.

[Table 18]

| Classification | Monomer | Photocatalyst (ppm) | Co-initiator I (ppm) | Co-initiator II (ppm) | Conversion Rate (%) | |
|---|---|---|---|---|---|---|
| | | | | | bulk polymerizat ion | film curing |
| 17-1 | 2-EHA | 4DP-IPN (1) | Borate V (300) | HNu254 (1000) | 32.7 | 87.8 |
| 17-2 | 2-EHA | 4DP-IPN (1) | Borate V (300) | HNu254 (500) | 20.5 | 84.1 |
| 17-3 | 2-EHA | 4DP-IPN (1) | Borate V (300) | HNu254 (200) | 29.8 | 79.7 |
| 17-4 | 2-EHA | 4DP-IPN (1) | Borate V (300) | HNu254 (100) | 16.6 | 66.6 |

According to the experimental results, when the amount of co-initiator II was reduced from 1,000 ppm to 100 ppm under the same conditions, the conversion rate during bulk polymerization slightly decreased. However, after preparation of the resin film, even when only 100 ppm of co-initiator II was used, an excellent conversion rate of 66.6% was observed.

In particular, when the amount was 200 ppm or more, the resin film showed a high conversion rate of approximately over 80%. Therefore, it was found that the use of 200 mol or more of co-initiator II per 1 mol of photocatalyst is more preferable in terms of the conversion rate of the resin film.

**Experimental Example 18: Analysis of Conversion Rate of Film According to Film Curing Time**

Using the same method as in Preparation Example 1, a photocured resin having a conversion rate of 22.0% was prepared by forming a photoinitiating system using 1 ppm of photocatalyst, 300 ppm of co-initiator I, and 500 ppm of co-initiator II, followed by visible light irradiation for 5 seconds.

Using this photocured resin, a resin film was prepared according to the method of Preparation Example 2. The second light irradiation time was adjusted to 20, 40, 60, 80, and 100 seconds, respectively, to prepare the resin films. The conversion rate after second curing (film curing) for each resin film was measured, and the results are shown in Table 19. The graph of the conversion rate is shown in FIG. 5.

[Table 19]

| Classification | Monomer | Photocatalyst (ppm) | Co-initiator I (ppm) | Co-initiator II (ppm) | Time (s) | Conversion Rate (%) |
|---|---|---|---|---|---|---|
| 18-1 | 2-EHA | 4DP-IPN (1) | Borate V (300) | HNu254 (500) | 20 | 49.5 |
| 18-2 | 2-EHA | 4DP-IPN (1) | Borate V (300) | HNu254 (500) | 40 | 84.8 |

(continued)

| Classification | Monomer | Photocatalyst (ppm) | Co-initiator I (ppm) | Co-initiator II (ppm) | Time (s) | Conversion Rate (%) |
|---|---|---|---|---|---|---|
| 18-3 | 2-EHA | 4DP-IPN (1) | Borate V (300) | HNu254 (500) | 60 | 81.4 |
| 18-4 | 2-EHA | 4DP-IPN (1) | Borate V (300) | HNu254 (500) | 80 | 90.0 |
| 18-5 | 2-EHA | 4DP-IPN (1) | Borate V (300) | HNu254 (500) | 100 | 84.1 |

According to the experimental results, when the second light irradiation time was 20 seconds, the conversion rate increased from 22.0% to 49.5%. When the second light irradiation time was extended to 40 seconds or more, the conversion rate improved to over 80%, reaching up to 90%. Therefore, it was found that the conversion rate increased through second curing, and particularly, a significant improvement in conversion rate was observed when the second light irradiation time was 40 seconds or more.

## Experimental Example 19: Analysis of Conversion Rate According to Film Thickness

Using the same method as in Preparation Example 1, a photocured resin having a conversion rate of 22.0% was prepared by forming a photoinitiating system using 1 ppm of photocatalyst, 300 ppm of co-initiator I, and 500 ppm of co-initiator II, followed by visible light irradiation for 5 seconds.

Using this photocured resin, a resin film was prepared by irradiating for 100 seconds according to the method of Preparation Example 2, except that the coating thickness was changed to 1.0 mm. The conversion rate after second curing (film curing) was measured, and the results are shown in Table 20 below.

[Table 20]

| Classification | Monomer | Photocatalyst (ppm) | Co-initiator I (ppm) | Co-initiator II (ppm) | Thickness | Conversion Rate (%) |
|---|---|---|---|---|---|---|
| 19-1 | 2-EHA | 4DP-IPN (1) | Borate V (300) | HNu254 (500) | 1.0mm | 70.1 |
| 19-2 | 2-EHA | 4DP-IPN (1) | Borate V (300) | HNu254 (500) | 50μm | 84.1 |

According to the experimental results, even when the thickness was 1.0 mm, the conversion rate was found to increase through second curing. However, when the thickness was increased from 50 μm to 1.0 mm under the same conditions, the conversion rate after film curing slightly decreased from 84.1% to 70.1%. Therefore, it was confirmed that a thickness of 50 μm is more preferable.

Although specific embodiments of the present disclosure have been described above, the present disclosure is not limited to the embodiments described above, and it can be modified and altered without departing from the spirit of the present disclosure. It should be understood that such modifications and alterations also fall within the technical scope of the present disclosure.

## Claims

**1.** A photocatalyst composition comprising

a photocatalyst having thermally activated delayed fluorescence (TADF) property; and
an ionic co-initiator.

**2.** The photocatalyst composition according to claim 1,
wherein the photocatalyst absorbs light in the wavelength range of 400 to 600 nm.

**3.** The photocatalyst composition according to claim 1,
wherein the photocatalyst is a cyanoarene-based compound.

**4.** The photocatalyst composition according to claim 1,

wherein the photocatalyst is represented by the following Chemical Formula 1:

[Chemical Formula 1]

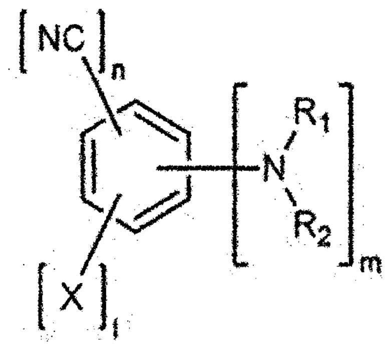

wherein, in Chemical Formula 1,
$R_1$ and $R_2$ are each independently hydrogen, deuterium, a halogen atom, a nitro group ($-NO_2$), a cyano group (-CN), -COOR (where R is hydrogen or $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy or $C_4$-$C_{18}$ aryl; or $R_1$ and $R_2$ are linked to form a substituted or unsubstituted carbazole structure,
X is a halogen atom selected from the group consisting of F, Cl, Br and I,
n is 1 or 2,
m is an integer from 3 to 5,
l is 0 or 1, and
n+m+l is an integer from 4 to 6.

**5.** The photocatalyst composition according to claim 1,

wherein the photocatalyst is represented by Chemical Formula 2 or 3:

[Chemical Formula 2]

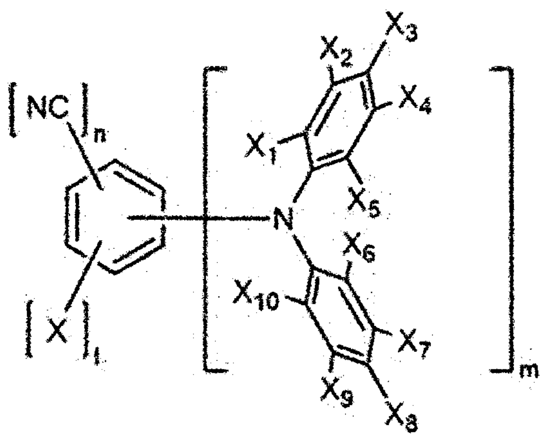

[Chemical Formula 3]

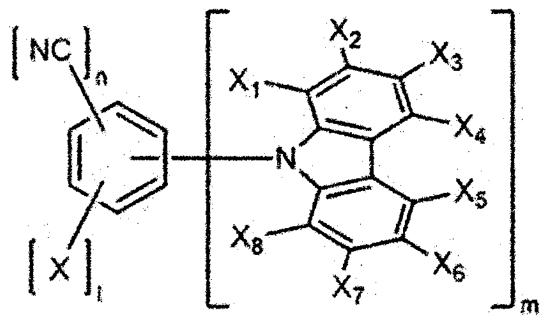

wherein, in Chemical Formula 2,
$X_1$ to $X_{10}$ are each independently hydrogen, deuterium, a halogen atom, $-NO_2$, -CN, - COOR (where R is hydrogen or $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy or $C_4$-$C_{18}$ aryl;
wherein, in Chemical Formula 3,
$X_1$ to $X_8$ are each independently hydrogen, deuterium, a halogen atom, $-NO_2$, -CN, - COOR (where R is hydrogen or $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy or $C_4$-$C_{18}$ aryl; and
wherein, in Chemical Formulae 2 and 3,
X is each independently a halogen atom selected from the group consisting of F, Cl, Br and I,
n is each independently 1 or 2,
m is each independently an integer from 3 to 5,
1 is each independently 0 or 1, and
n+m+l is each independently an integer from 4 to 6.

**6.** The photocatalyst composition according to claim 1,
wherein the molar ratio of the photocatalyst to the co-initiator is from 1:10 to 1:5,000.

**7.** The photocatalyst composition according to claim 1,
wherein the ionic co-initiator comprises an anionic co-initiator and a cationic co-initiator.

**8.** The photocatalyst composition according to claim 7,
wherein the anionic co-initiator is a borate salt compound.

**9.** The photocatalyst composition according to claim 7,

wherein the anionic co-initiator is represented by the following Chemical Formula 4:

[Chemical Formula 4]

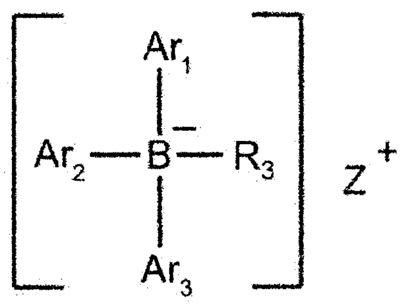

wherein, in Chemical Formula 4,
$R_3$ is a $C_1$-$C_{24}$ alkyl or $-CH2SiR'_3$ (where R' is hydrogen or $C_1$-$C_{24}$ alkyl),
$Ar_1$ to $Ar_3$ are each independently substituted or unsubstituted $C_4$-$C_{18}$ aryl, and

$Z^+$ is $Li^+$, $K^+$, $Na^+$, $Rb^+$, or a substituted or unsubstituted safranin ion, pyrylium ion, cyanine ion, iodonium ion, sulfonium ion, phosphonium ion or ammonium ion.

**10.** The photocatalyst composition according to claim 7, wherein the cationic co-initiator is at least one compound selected from the group consisting of an iodonium salt, a sulfonium salt and a phosphonium salt.

**11.** The photocatalyst composition according to claim 7,

wherein the cationic co-initiator is an iodonium salt compound represented by Chemical Formula 6:

[Chemical Formula 6]

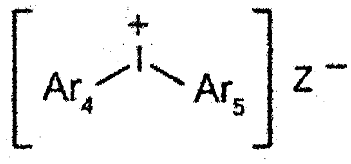

wherein, in Chemical Formula 6,
$Ar_4$ and $Ar_5$ are each independently a substituted or unsubstituted $C_4$-$C_{18}$ aryl, and
$Z^-$ is $PF_6^-$, $SbF_6^-$, $AsF_6^-$, $BF_4^-$, $(C_6F_5)_4B^-$, $Cl^-$, $Br^-$, $HSO_4^-$, $CF_3SO_3^-$, $FSO_3^-$, $CH_3SO_3^-$, $ClO_4^-$, $PO_4^-$, $NO_3^-$, $SO_4^-$, $CH_3SO_4^-$, or a substituted or unsubstituted $C_1$-$C_{20}$ alkylsulfonate, $C_2$-$C_{20}$ haloalkylsulfonate, $C_4$-$C_{10}$ arylsulfonate, camphorsulfonate, $C_1$-$C_{20}$ perfluoroalkylsulfonyl methide or $C_1$-$C_{20}$ perfluoroalkylsulfonyl imide ion.

**12.** The photocatalyst composition according to claim 7,

wherein the cationic co-initiator is a sulfonium salt compound represented by Chemical Formula 7:

[Chemical Formula 7]

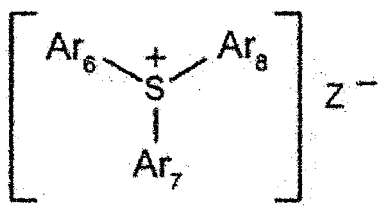

wherein, in Chemical Formula 7,
$Ar_6$ to $Ar_8$ are each independently a substituted or unsubstituted $C_4$-$C_{18}$ aryl, and
$Z^-$ is $PF_6^-$, $SbF_6^-$, $AsF_6^-$, $BF_4^-$, $(C_6F_5)_4B^-$, $Cl^-$, $Br^-$, $HSO_4^-$, $CF_3SO_3^-$, $FSO_3^-$, $CH_3SO_3^-$, $ClO_4^-$, $PO_4^-$, $NO_3^-$, $SO_4^-$, $CH_3SO_4^-$, or a substituted or unsubstituted $C_1$-$C_{20}$ alkylsulfonate, $C_2$-$C_{20}$ haloalkylsulfonate, $C_4$-$C_{10}$ arylsulfonate, camphorsulfonate, $C_1$-$C_{20}$ perfluoroalkylsulfonyl methide or $C_1$-$C_{20}$ perfluoroalkylsulfonyl imide ion.

**13.** The photocatalyst composition according to claim 7,

wherein the cationic co-initiator is a phosphonium salt compound represented by Chemical Formula 8:

[Chemical Formula 8]

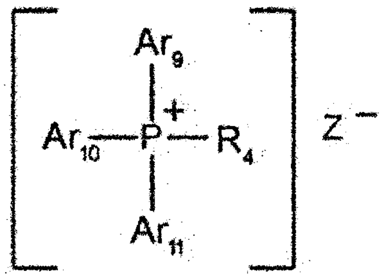

wherein, in Chemical Formula 8,

$R_4$ is hydrogen, deuterium, a halogen atom, $-NO_2$, -CN, -COOR, $-NRCOCH_3$, -SR, $-COONH_xR_{2-x}$, $NH_xR_{2-x}$, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy or $C_4$-$C_{18}$ aryl group,

R is hydrogen or a $C_1$-$C_{24}$ alkyl group,

x is an integer of 0 to 2,

$Ar_9$ to $Ar_{11}$ are each independently a substituted or unsubstituted $C_4$-$C_{18}$ aryl, and

$Z^-$ is $PF_6^-$, $SbF_6^-$, $AsF_6^-$, $BF_4^-$, $(C_6F_5)_4B^-$, $Cl^-$, $Br^-$, $HSO_4^-$, $CF_3SO_3^-$, $FSO_3^-$, $CH_3SO_3^-$, $ClO_4^-$, $PO_4^-$, $NO_3^-$, $SO_4^-$, $CH_3SO_4^-$, or a substituted or unsubstituted $C_1$-$C_{20}$ alkylsulfonate, $C_2$-$C_{20}$ haloalkylsulfonate, $C_4$-$C_{10}$ arylsulfonate, camphorsulfonate, $C_1$-$C_{20}$ perfluoroalkylsulfonyl methide or $C_1$-$C_{20}$ perfluoroalkylsulfonyl imide ion.

**14.** A photocurable composition comprising

a polymerizable monomer having an ethylenically unsaturated bond;
a photocatalyst having thermally activated delayed fluorescence (TADF) property; and
an ionic co-initiator.

**15.** The photocurable composition according to claim 14, wherein the photocatalyst is used in an amount of 0.00001 to 0.01 mol based on 100 mol of the polymerizable monomer.

**16.** A method for preparing a photocured resin, comprising a step of irradiating visible light onto a photocurable composition comprising a polymerizable monomer having an ethylenically unsaturated bond, a photocatalyst having thermally activated delayed fluorescence property, and an ionic co-initiator to polymerize the polymerizable monomer.

**17.** The method for preparing a photocured resin according to claim 16, wherein the visible light irradiation is performed for 1 to 240 seconds.

**18.** The method for preparing a photocured resin according to claim 16, further comprising a step of degassing with nitrogen gas before irradiating visible light.

**19.** The method for preparing a photocured resin according to claim 16, further comprising a step of additionally irradiating visible light onto the prepared resin.

**20.** The method for preparing a photocured resin according to claim 19, wherein the additional visible light irradiation is performed after applying the prepared resin onto a substrate at a thickness of 1μm to 8mm.

【FIG. 1】

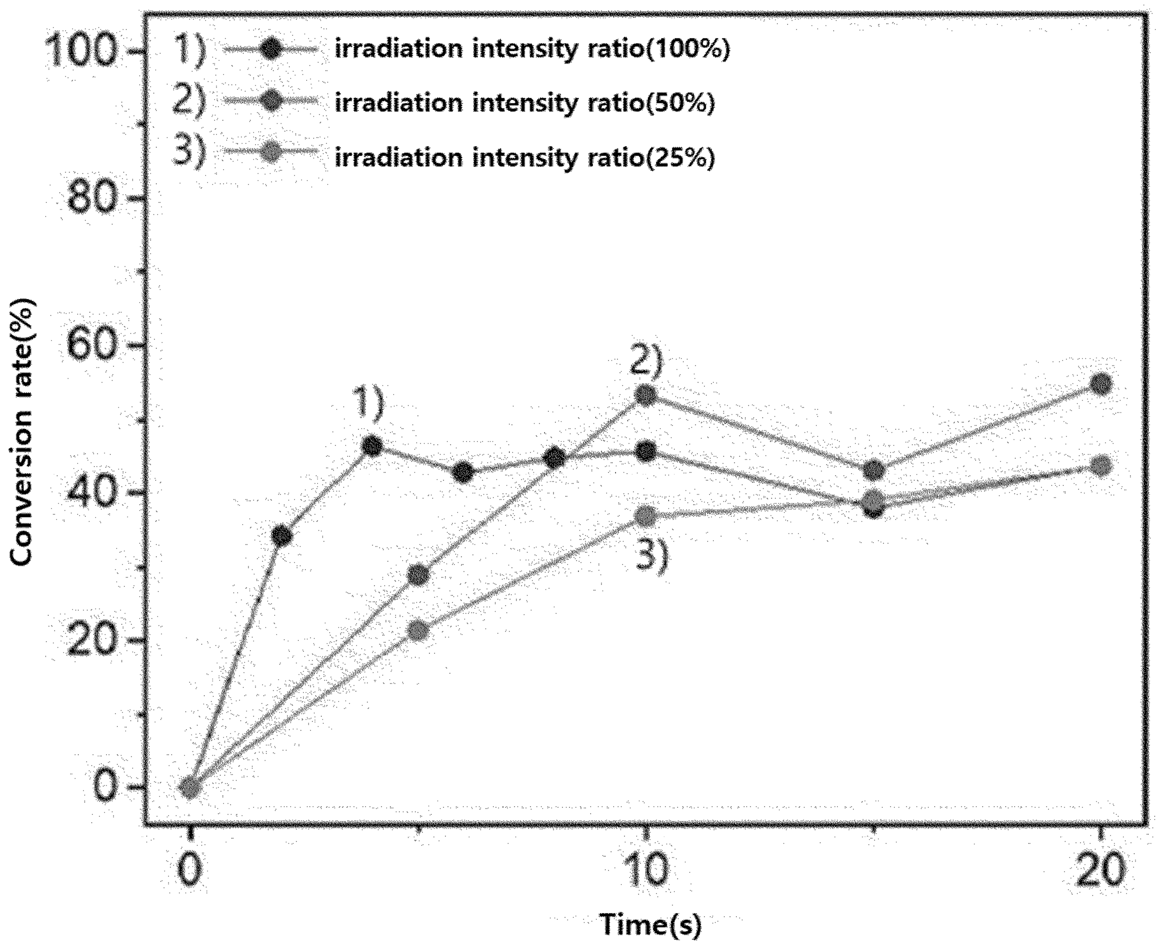
1) irradiation intensity ratio(100%)
2) irradiation intensity ratio(50%)
3) irradiation intensity ratio(25%)
1)
2)
3)
Conversion rate(%)
100
80
60
40
20
0
0
10
20
Time(s)

【FIG. 2】

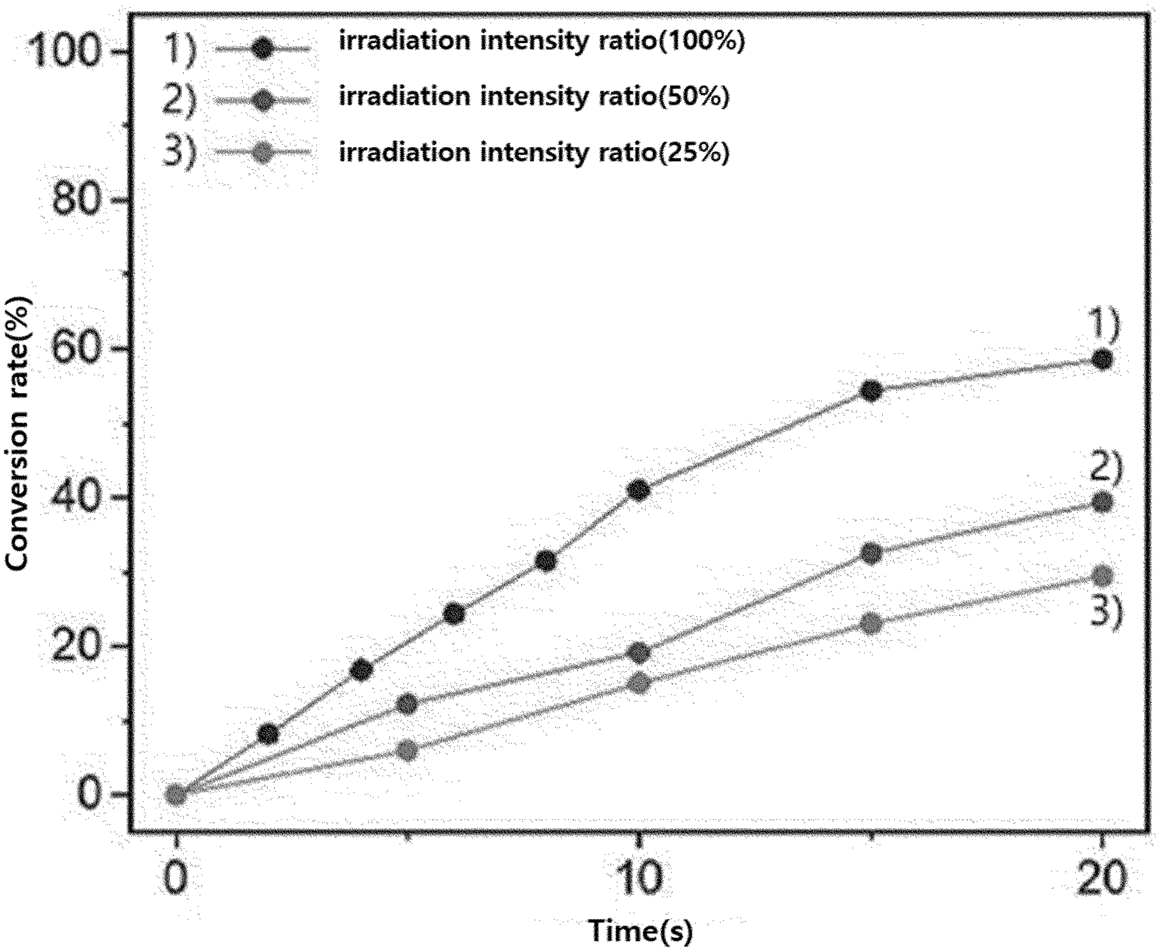
1) irradiation intensity ratio(100%)
2) irradiation intensity ratio(50%)
3) irradiation intensity ratio(25%)
Conversion rate(%)
Time(s)
0
10
20
20
40
60
80
100
1)
2)
3)

【FIG. 3】

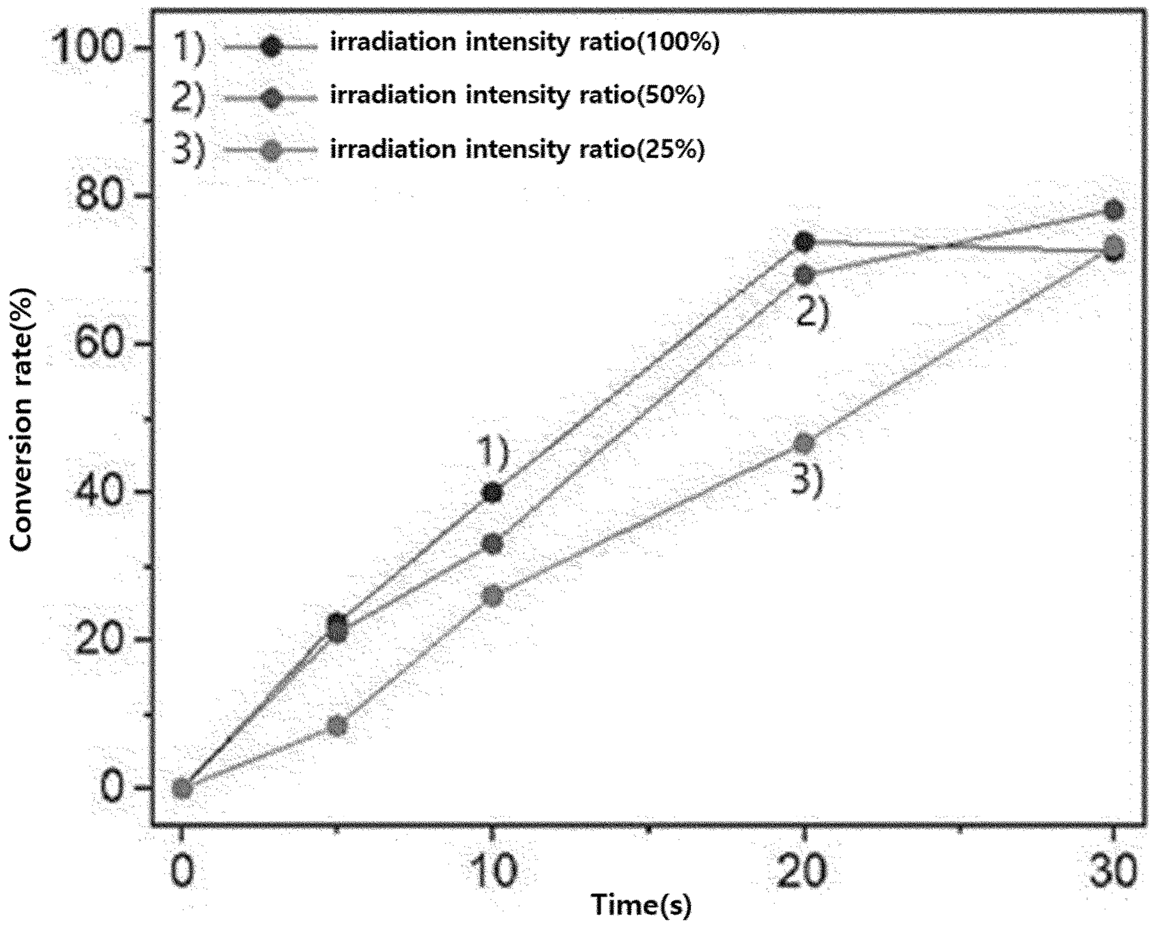
100
80
60
40
20
0
Conversion rate(%)
0
10
20
30
Time(s)
1) irradiation intensity ratio(100%)
2) irradiation intensity ratio(50%)
3) irradiation intensity ratio(25%)
1)
2)
3)

【FIG. 4】

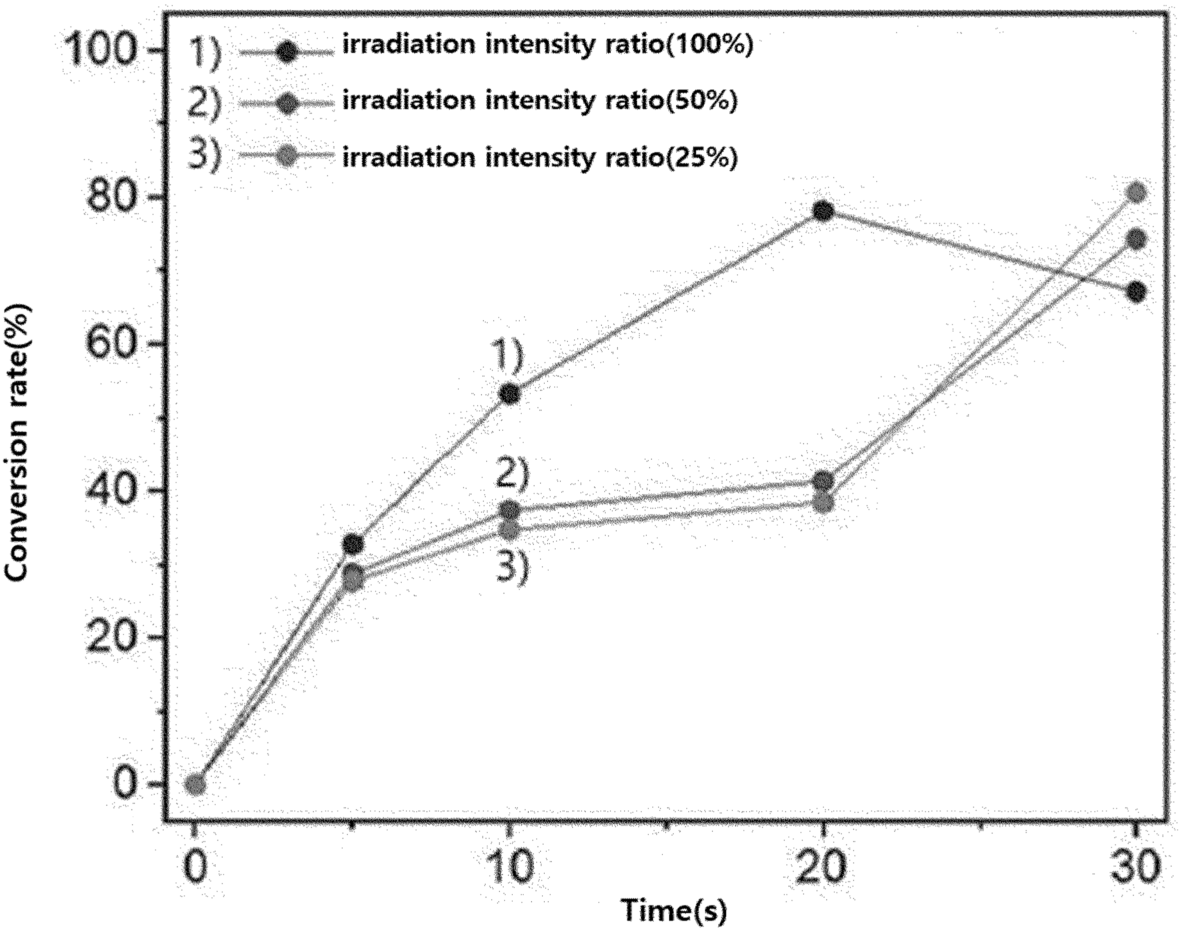
1) irradiation intensity ratio(100%)
2) irradiation intensity ratio(50%)
3) irradiation intensity ratio(25%)
Conversion rate(%)
Time(s)
0
20
40
60
80
100
0
10
20
30
1)
2)
3)

【FIG. 5】

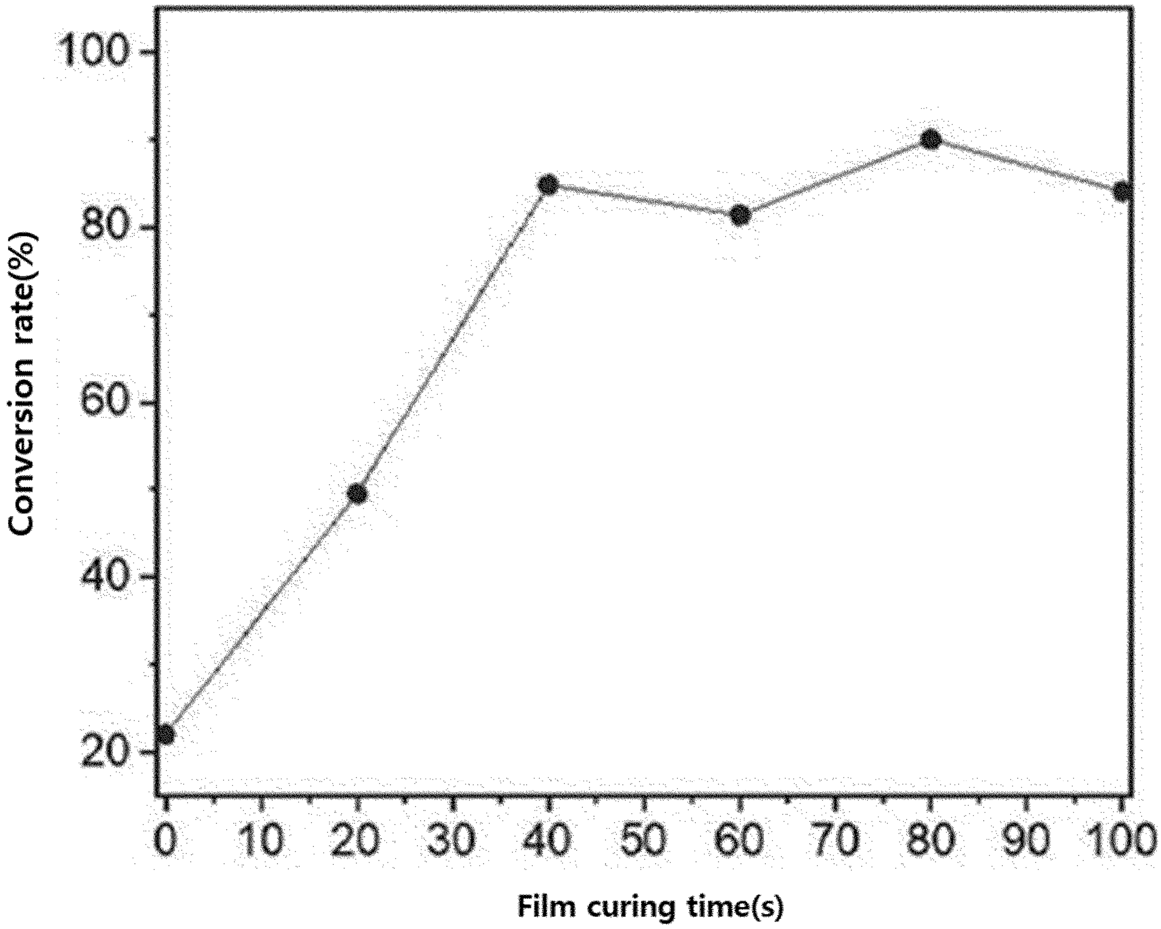
Conversion rate(%)
100
80
60
40
20
0
10
20
30
40
50
60
70
80
90
100
Film curing time(s)

**INTERNATIONAL SEARCH REPORT**

International application No.
**PCT/KR2024/002353**

**A. CLASSIFICATION OF SUBJECT MATTER**

**C08F 20/00**(2006.01)i; **C08F 2/50**(2006.01)i; **B01J 35/39**(2024.01)i; **B01J 31/02**(2006.01)i

According to International Patent Classification (IPC) or to both national classification and IPC

**B. FIELDS SEARCHED**

Minimum documentation searched (classification system followed by classification symbols)

C08F 20/00(2006.01); B01J 31/02(2006.01); B01J 35/00(2006.01); C08F 120/14(2006.01); C08F 2/50(2006.01); C08K 5/00(2006.01); C09J 4/00(2006.01); G03F 7/004(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, CAplus), Google & keywords: 열 활성 지연 형광(thermally activated delayed fluorescence, TADF), 광촉매(photocatalyst), 공개시제(co-initiator), 광경화 수지(photocured resin)

**C. DOCUMENTS CONSIDERED TO BE RELEVANT**

| Category* | Citation of document, with indication, where appropriate, of the relevant passages | Relevant to claim No. |
|---|---|---|
| X | KR 10-2020-0021881 A (JSR CORPORATION) 02 March 2020 (2020-03-02) See abstract; claims 1-11; and paragraphs [0037], [0104], [0105], [0118], [0140], [0159], [0213] and [0222]. | 1-12,14-20 |
| Y | | 13 |
| Y | CHEN, X. -L. et al. Phosphonium-based ionic thermally activated delayed fluorescence emitters for high-performance partially solution-processed organic light-emitting diodes. CCS Chem. 27 February 2023, vol. 5, pp. 589-597. See abstract; pages 593 and 594; and figure 1. | 13 |
| A | CN 115466340 A (NORTHEAST FORESTRY UNIVERSITY) 13 December 2022 (2022-12-13) See claims 1-10; and paragraphs [0100] and [0101]. | 1-20 |
| A | KR 10-2020-0041225 A (UNIST(ULSAN NATIONAL INSTITUTE OF SCIENCE AND TECHNOLOGY)) 21 April 2020 (2020-04-21) See claims 1-6. | 1-20 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **29 May 2024** | **31 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208**<br>Facsimile No. **+82-42-481-8578** | Telephone No. |

Form PCT/ISA/210 (second sheet) (July 2022)

INTERNATIONAL SEARCH REPORT

International application No.
**PCT/KR2024/002353**

**C. DOCUMENTS CONSIDERED TO BE RELEVANT**

| Category* | Citation of document, with indication, where appropriate, of the relevant passages | Relevant to claim No. |
|---|---|---|
| A | KR 10-2021-0146614 A (KOREA RESEARCH INSTITUTE OF CHEMICAL TECHNOLOGY) 06 December 2021 (2021-12-06)<br>See entire document. | 1-20 |

Form PCT/ISA/210 (second sheet) (July 2022)

**INTERNATIONAL SEARCH REPORT**
**Information on patent family members**

International application No.
**PCT/KR2024/002353**

| Patent document cited in search report | | | Publication date (day/month/year) | Patent family member(s) | | | Publication date (day/month/year) |
|---|---|---|---|---|---|---|---|
| KR | 10-2020-0021881 | A | 02 March 2020 | CN | 110850680 | A | 28 February 2020 |
| | | | | JP | 2020-030290 | A | 27 February 2020 |
| | | | | JP | 7180202 | B2 | 30 November 2022 |
| CN | 115466340 | A | 13 December 2022 | | None | | |
| KR | 10-2020-0041225 | A | 21 April 2020 | KR | 10-2130391 | B1 | 06 July 2020 |
| | | | | KR | 10-2130392 | B1 | 06 July 2020 |
| | | | | WO | 2020-075971 | A1 | 16 April 2020 |
| KR | 10-2021-0146614 | A | 06 December 2021 | | None | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020100072003
- KR 102019660